(19) **Europäisches Patentamt / European Patent Office / Office européen des brevets**

(11) **EP 4 589 938 B1**

(12) **EUROPEAN PATENT SPECIFICATION**

(45) Date of publication and mention
of the grant of the patent:
**22.07.2026 Bulletin 2026/30**

(21) Application number: **25151927.8**

(22) Date of filing: **15.01.2025**

(51) International Patent Classification (IPC):
*H04N 1/00* (2006.01)     *G03G 15/00* (2006.01)
*G06F 3/12* (2006.01)

(52) Cooperative Patent Classification (CPC):
**H04N 1/00005; G03G 15/502; G03G 15/55; G06F 3/121; G06F 3/1215; G06F 3/1234; G06F 3/1259; G06F 3/1285; H04N 1/00015; H04N 1/00029**

(54) **DIAGNOSTIC APPARATUS, CONTROL METHOD FOR THE SAME, STORAGE MEDIUM, AND IMAGE FORMING APPARATUS**

DIAGNOSEVORRICHTUNG, STEUERVERFAHREN DAFÜR, SPEICHERMEDIUM UND BILDERZEUGUNGSVORRICHTUNG

APPAREIL DE DIAGNOSTIC, PROCÉDÉ DE COMMANDE ASSOCIÉ, SUPPORT D'INFORMATIONS ET APPAREIL DE FORMATION D'IMAGES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.01.2024 JP 2024006210**

(43) Date of publication of application:
**23.07.2025 Bulletin 2025/30**

(73) Proprietor: **CANON KABUSHIKI KAISHA**
**Tokyo 146-8501 (JP)**

(72) Inventor: **YABE, Takashi**
**Tokyo 146-8501 (JP)**

(74) Representative: **TBK**
**Bavariaring 4-6**
**80336 München (DE)**

(56) References cited:
**US-A1- 2012 075 659     US-B2- 11 624 995**
**US-B2- 8 294 918**

**Description**

BACKGROUND OF THE INVENTION

Field of the Invention

The present invention relates to a diagnostic apparatus that performs diagnosis of an apparatus based on a read image obtained by reading an image obtained through image formation, a control method for the same, a storage medium, and an image forming apparatus.

Description of the Related Art

In an image forming apparatus, printed material obtained by printing is read by a scanner, an image defect (abnormality) in the printed material is detected based on the read image data, and a part that is a causal factor is specified based on the abnormality detection result. An image forming apparatus is also known that automatically repairs a specified part when an abnormality is detected in an image printed by the image forming apparatus. Japanese Patent Laid-Open No. 2021-164105 proposes an apparatus that sequentially repairs a plurality of abnormalities when the plurality of abnormalities are detected in an image formed by an image forming apparatus.

The above-described conventional technology includes a function of designating the order of repairing abnormalities when a plurality of abnormalities are detected. However, the repair operation is executed sequentially at a timing when an abnormality is detected, and no consideration has been given to designating a timing for executing the repair operation. Accordingly, in the above-described conventional technology, when an abnormality is detected, printing by the image forming apparatus is interrupted at that timing, and repair work is performed. That is, printing cannot be executed during the repair work, and the printed material of the user cannot be produced during that time, which reduces the user's productivity.

Patent document US11624995 discloses an image forming apparatus comprising a controller that controls start timing of a failure diagnosis specifying the failed portion that causes an abnormality according to a determined type of abnormality when the abnormality is detected by a detection unit.

SUMMARY OF THE INVENTION

The present invention enables the realization of a mechanism capable of selecting a timing for executing automatic repair in an image forming unit.

The present invention in its first aspect provides a diagnostic apparatus as specified in claims 1-10.

The present invention in its second aspect provides a control method as specified in claim 11.

The present invention in its third aspect provides a non-transitory computer-readable storage medium as specified in claim 12.

The present invention in its forth aspect provides an image forming apparatus as specified in claim 13.

Further features of the present invention will be apparent from the following description of exemplary embodiments with reference to the attached drawings.

BRIEF DESCRIPTION OF THE DRAWINGS

FIG. 1 is a diagram showing an example of a network configuration including a printing system according to an embodiment.

FIG. 2 is a cross-sectional view illustrating an example of a hardware configuration of an image forming apparatus according to an embodiment.

FIG. 3 is a block diagram showing an internal configuration of an image forming apparatus, an external controller, and a client PC according to an embodiment.

FIG. 4 is a diagram illustrating an example of a job management screen according to an embodiment.

FIG. 5 is a diagram showing an example of a level setting screen for setting a diagnosis level according to an embodiment.

FIG. 6 is a diagram showing an example of an automatic repair setting screen after diagnosis according to an embodiment.

FIGS. 7A-7B are a diagram showing a sign diagnosis processing flow according to an embodiment.

FIG. 8 is a diagram showing an example of sizes of parameters during sign diagnosis and image diagnosis according to an embodiment.

FIG. 9 is a diagram showing an example of a detailed repair processing execution timing setting screen according to an embodiment.

FIG. 10 is a diagram showing an example of causal factors, parts, and repair contents for repair after diagnosis according to an embodiment.

FIG. 11 is a diagram showing a flow of image diagnosis processing according to an embodiment.

FIGS. 12A-12B are a diagram showing a flow of inspection diagnosis processing and image diagnosis processing according to an embodiment.

FIG. 13 is a diagram showing an example of a chart for image diagnosis according to an embodiment.

FIG. 14 is a diagram showing an example of a setting screen for sign image diagnosis according to an embodiment.

FIG. 15 is a diagram showing an example of a UI screen for setting individual repair contents, repair timing statuses, and individual repair timings according to an embodiment.

FIG. 16 is a diagram showing an example of a setting screen for setting individual repair timings according to an embodiment.

FIG. 17 is a flowchart showing a procedure for determining a forced execution count according to an embodiment.

FIG. 18 is a diagram showing a relationship between a print counter for a sign and a print counter for abnormality prediction according to an embodiment.

FIG. 19 is a flowchart showing a procedure for forcibly performing repair according to an embodiment.

DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

First Embodiment

System Configuration

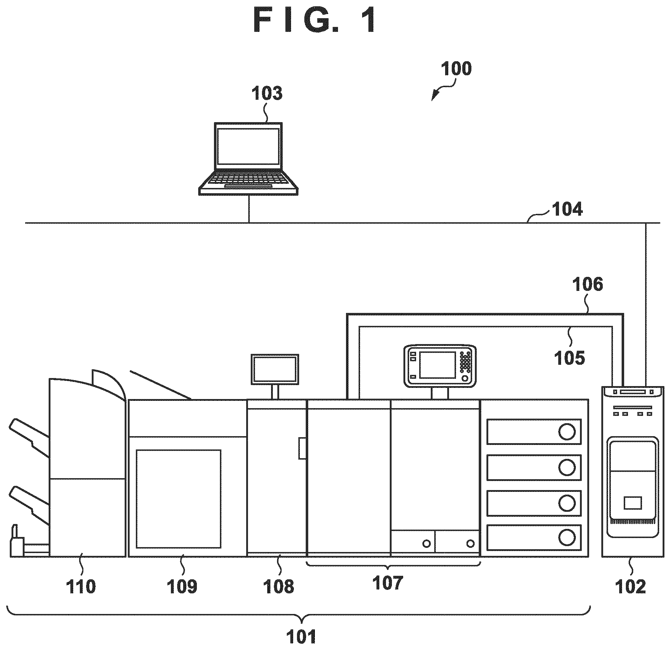

A first embodiment of the present invention will be described below. An example of a network configuration including a printing system (image processing system) according to this embodiment will be described with reference to FIG. 1. As shown in FIG. 1, a printing system 100 includes an image forming apparatus 101 and an external controller 102. The image forming apparatus 101 and the external controller 102 are connected to each other via an internal LAN 105 and a video cable 106 so as to be able to communicate with each other. The external controller 102 is communicably connected to a client PC 103 via an external LAN 104. Note that in this embodiment, a mode is described as an example in which the image forming apparatus 101 and the external controller 102 are provided separately, but this is not intended to limit the present invention, and for example, the external controller 102 may also be provided integrally with the image forming apparatus 101. In this case, the image forming apparatus 101 and the client PC 103 are connected so as to be able to communicate with each other.

The client PC 103 can issue a printing instruction to the external controller 102 via the external LAN 104. A printer driver having a function of converting image data to be subjected to print processing into a page description language (PDL) that can be processed by the external controller 102 is installed in the client PC 103. A user who wishes to perform printing can operate the client PC 103 to issue a printing instruction from various applications installed in the client PC 103 via the printer driver. The printer driver transmits PDL data, which is print data, to the external controller 102 based on a printing instruction from the user. Upon receiving the PDL data from the client PC 103, the external controller 102 analyzes and interprets the received PDL data. Based on the interpretation result, rasterization processing is performed to generate a bitmap image (print image data) with a resolution suited to the image forming apparatus 101, and a print job is input to the image forming apparatus 101 to instruct printing.

Next, the image forming apparatus 101 will be described. In the image forming apparatus 101, a plurality of apparatuses having different functions are connected to enable complex printing processing such as bookbinding. The image forming apparatus 101 includes a printing unit 107 (image forming unit), a diagnosis unit 108, a stacker 109, and a finisher 110. Each module will be described below.

The printing unit 107 prints an image according to the content of the print job and discharges the printed recording medium (paper, sheet, etc.). The printed recording medium discharged from the printing unit 107 is transported through each apparatus in the following order: the diagnosis unit 108, the stacker 109, and the finisher 110. In this embodiment, the image forming apparatus 101 of the printing system 100 is an example of an image forming apparatus, but the printing unit 107 included in the image forming apparatus 101 is also called an image forming apparatus in some cases. The printing unit 107 forms (prints) an image on a recording medium that is fed and transported from a paper feed unit disposed below the printing unit 107, using toner (color material) that is a recording material.

The diagnosis unit 108 is a diagnostic apparatus, and is an image diagnosis apparatus that performs diagnosis of whether or not there is an abnormal portion of the image forming apparatus 101 using the printed recording medium on which an image has been printed by the printing unit 107 and which has been transported through a transport path. Specifically, the diagnosis unit 108 reads the image printed on the transported printed recording medium and performs diagnosis based on the obtained read image. An abnormality is diagnosed by extracting a diagnostic region from the read image and checking the difference in read signal values within the extracted diagnostic region. The processing of the diagnosis unit will be described in detail later. Note that the diagnosis unit is used also during inspection. The diagnosis unit is also an apparatus that inspects the printed recording medium for defects and abnormalities based on a comparison between the print data and the data of the printed recording medium on which an image was printed by the printing unit 107 and which was transported through the transport path.

The stacker 109 is an apparatus capable of stacking a large number of printed recording media. The finisher 110 is an apparatus capable of executing finishing processing such as stapling, punching, and saddle stitching on the transported printed recording medium. After being processed by the finisher 110, the recording medium is discharged to a predetermined discharge tray.

In the configuration example of FIG. 1, the external controller 102 is connected to the image forming apparatus 101, but this embodiment can be applied also to a different configuration. For example, a configuration may be used in which the image forming apparatus 101 is connected to the external LAN 104 and print data is transmitted from the client PC 103 to the image forming apparatus 101 without going through the external controller 102. In this case, data analysis and rasterization of the print data is performed by the image forming apparatus 101.

Hardware Configuration of Image Forming Apparatus 101

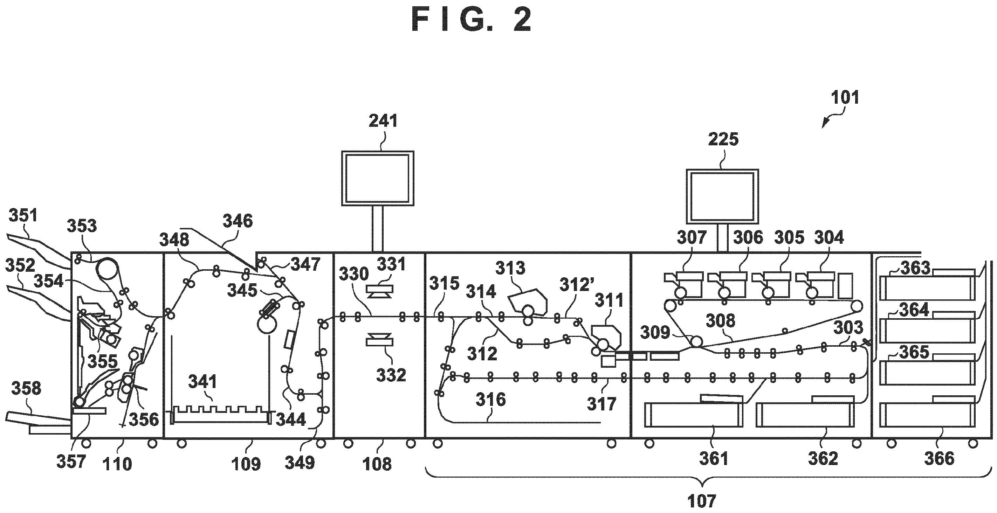

An example of the hardware configuration of the image forming apparatus 101 according to this embodiment will be described with reference to FIG. 2. The printing unit 107 includes a plurality of paper feed decks. In this embodiment, six types of decks, namely, paper feed decks 361, 362, 363, 364, 365, and 366, are provided. Each paper feed deck stores various types of recording media (sheets). During image formation, the uppermost recording medium among the recording media stored in each paper feed deck is separated one by one and fed to a transport path 303.

Each of image forming stations 304 to 307 includes a photosensitive drum (photoconductor), and forms a toner image on the photosensitive drum using toner of a different color. Specifically, the image forming stations 304 to 307 form toner images using yellow (Y), magenta (M), cyan (C), and black (K) toners, respectively.

The toner images of the respective colors formed in the image forming stations 304 to 307 are transferred onto an intermediate transfer belt 308 in order, so as to be overlaid on each other (primary transfer). The toner images transferred onto the intermediate transfer belt 308 are transported to a secondary transfer position 309 as the intermediate transfer belt 308 rotates. At the secondary transfer position 309, the toner images are transferred from the intermediate transfer belt 308 onto the recording medium transported through the transport path 303 (secondary transfer). After the secondary transfer, the recording medium is transported to a fixing unit 311. The fixing unit 311 includes a pressure roller and a heating roller. Heat and pressure are applied to the recording medium while it passes between these rollers, thereby performing a fixing treatment in which the toner images are fixed onto the recording medium. The recording medium that has passed through the fixing unit 311 is transported through a transport path 312 to a connection point 315 between the printing unit 107 and the diagnosis unit 108. In this manner, a color image is formed (printed) on the recording medium.

If further fixing treatment is required depending on the type of recording medium, the recording medium that has passed through the fixing unit 311 is guided to a transport path 314 in which a fixing unit 313 is provided. The fixing unit 313 performs a further fixing treatment on the recording medium transported through the transport path 314. The recording medium that has passed through the fixing unit 313 is transported to the connection point 315. Also, if an operation mode of performing double-sided printing is set, an image is printed on a first side, and the recording medium transported through the transport path 312 or the transport path 314 is guided to an inversion path 316. The recording medium inverted by the inversion path 316 is guided to a double-sided transport path 317 and transported to the secondary transfer position 309. As a result, toner images are transferred to a second surface of the recording medium, which is opposite to the first surface, at the secondary transfer position 309. Thereafter, the recording medium passes through the fixing unit 311 (and the fixing unit 313), thereby completing the formation of a color image on the second side of the recording medium.

When the formation (printing) of an image in the printing unit 107 is completed, the printed recording medium is transported to the connection point 315 and then transported into the diagnosis unit 108. The diagnosis unit 108 includes image reading units 331 and 332 each having a contact image sensor (CIS) on the transport path 330 through which the printed recording medium from the printing unit 107 is transported. The image reading units 331 and 332 are arranged at positions facing each other across the transport path 330. The image reading units 331 and 332 read the upper surface (first side) and the lower surface (second side) of the recording medium, respectively. Note that the image reading unit may also be constituted by, for example, a charge coupled device (CCD) or line scan camera instead of a CIS.

The diagnosis unit 108 performs various types of image diagnosis processing for the image forming apparatus 101 based on the image printed on the printed recording medium transported through the transport path 330. Specifically, at the timing when the printed recording medium that is being transported reaches a predetermined position, the diagnosis unit 108 performs reading processing using the image reading units 331 and 332 to read the image on the printed recording medium. Based on the read image, sign diagnosis for finding a sign that has not yet become an abnormality of the image forming apparatus, inspection diagnosis for inspecting an abnormality in the output during printing, and image diagnosis for finding an abnormality of the image forming apparatus are performed. Also, the causal factor of the sign or abnormality is specified based on the results of sign diagnosis and image diagnosis, and processing for repairing the part that is the causal factor is automatically executed. Sign diagnosis is diagnosis in which a sign that may become an abnormality in the future is found, and in which immediate repair after diagnosis is not required. Also, sign diagnosis is basically performed by the user with the printed image that is currently being printed.

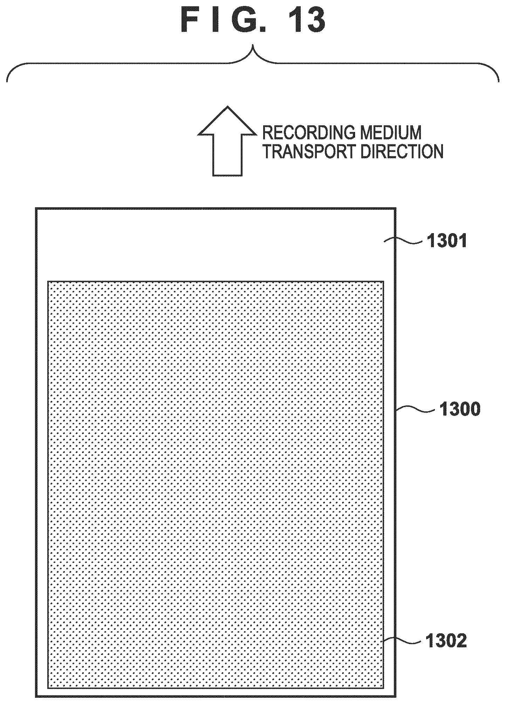

Image diagnosis is diagnosis in which an abnormality is detected and immediately repaired. Image diagnosis is generally performed while printing is stopped. When performing image diagnosis by itself, a chart for image diagnosis is printed and the diagnosis is performed using the printed image. When an abnormality is found on printed material during inspection, image diagnosis is also used to analyze the causal factor of the abnormality. FIG. 13 shows an example of a chart for image diagnosis. A chart 1300 includes a base portion 1301 and an image formation portion 1302. The diagnosis unit 108 can use the chart 1300 printed by the printing unit 107 to perform diagnosis of an abnormality (sign). Note that various charts may also be used for image diagnosis depending on the type of abnormality (spot, streak, etc.), and the present invention is not intended to be limited to the example of the chart shown in FIG. 13. The recording media that have passed through the diagnosis unit 108 are transported to the stacker 109 in sequence.

The stacker 109 includes a stack tray 341 as a tray on which the printed recording medium transported from the diagnosis unit 108 disposed upstream in the transport direction of the printed recording media is stacked. The printed recording medium that has passed through the diagnosis unit 108 is transported along a transport path 344 in the stacker 109. The printed recording medium transported along the transport path 344 is guided to a transport path 345, whereby the printed recording medium is stacked on the stack tray 341.

The stacker 109 further includes an escape tray 346 as a discharge tray. In this embodiment, the escape tray 346 is used to discharge a recording medium on which a test chart used in image diagnosis performed by the diagnosis unit 108 is recorded. The printed recording medium transported along the transport path 344 is guided to a transport path 347 and transported to the escape tray 346. Printed recording media that are transported without being stacked or discharged in the stacker 109 are transported to the downstream finisher 110 via a transport path 348. The escape tray 346 is also used to discharge printed recording media that have been determined as defective during inspection performed by the diagnosis unit 108.

The stacker 109 further includes an inversion unit 349 for inverting the orientation of the printed recording medium being transported. The inversion unit 349 is used, for example, to make the orientation of the recording medium input into the stacker 109 the same as the orientation of the printed recording medium when it is stacked in the stack tray 341 and output from the stacker 109. Note that the inversion unit 349 does not perform an inversion operation on the printed recording medium that is transported to the finisher 110 without being stacked in the stacker 109.

The finisher 110 executes a finishing function designated by a user on the printed recording medium transported from the diagnosis unit 108, which is disposed upstream in the transport direction of the printed recording medium. In this embodiment, the finisher 110 has finishing functions such as a stapling function (one or two-point binding), a punching function (two or three holes), and a saddle stitch binding function. The finisher 110 includes two discharge trays 351 and 352. When finishing processing is not to be performed by the finisher 110, the printed recording medium transported to the finisher 110 is discharged to a discharge tray 351 via a transport path 353. When finishing processing such as stapling is to be performed by the finisher 110, the printed recording medium transported to the finisher 110 is guided to a transport path 354. The finisher 110 uses a finishing processing unit 355 to execute finishing processing designated by a user on the printed recording medium transported along the transport path 354, and discharges the printed recording medium subjected to the finishing processing onto a discharge tray 352.

Functional Configurations

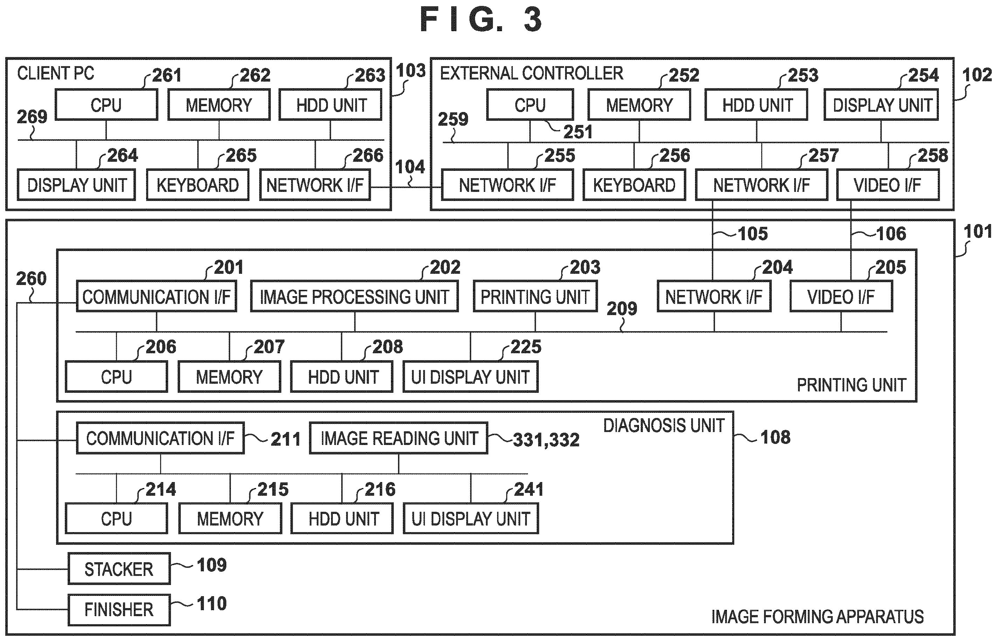

Functional configurations of the image forming apparatus 101, the external controller 102, and the client PC 103 according to this embodiment will be described with reference to FIG. 3. The printing unit 107 of the image forming apparatus 101 includes a communication interface (I/F) 201, a network I/F 204, a video I/F 205, a CPU 206, a memory 207, an HDD unit 208, and a UI display unit 225. The printing unit 107 further includes an image processing unit 202 and a print unit 203. These components are connected to each other via a system bus 209 so as to be able to transmit and receive data to and from each other.

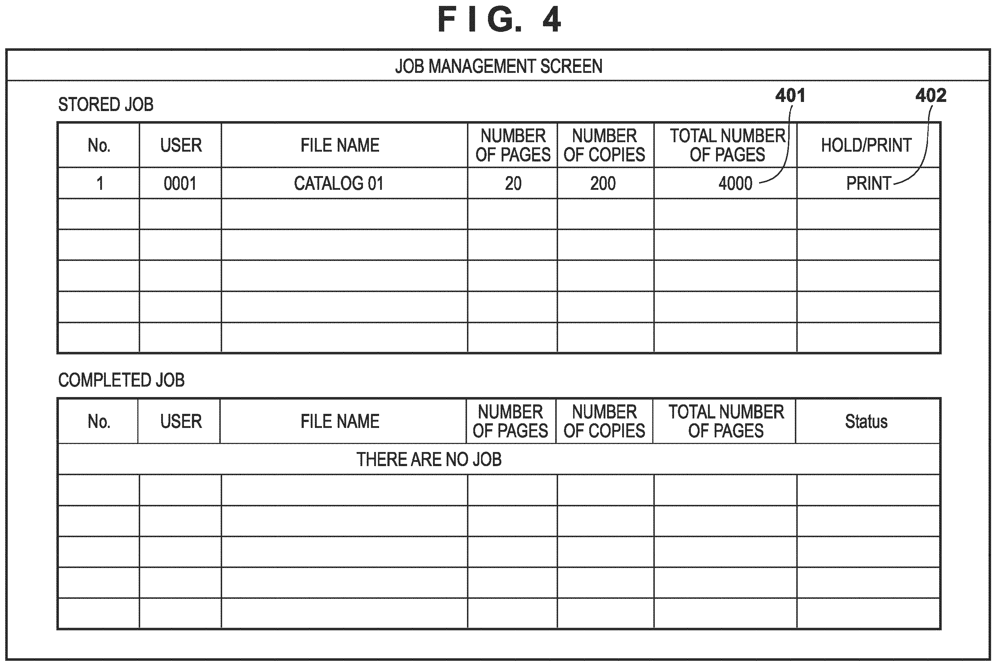

The communication I/F 201 is connected to the diagnosis unit 108, the stacker 109, and the finisher 110 via a communication cable 260. The CPU 206 performs communication for controlling each apparatus via the communication I/F 201. The network I/F 204 is connected to the external controller 102 via the internal LAN 105 and is used for communication of control data and the like. The video I/F 205 is connected to the external controller 102 via the video cable 106 and is used for communication of data such as image data. Note that the printing unit 107 (image forming apparatus 101) and the external controller 102 may also be connected by only the video cable 106, as long as the operation of the image forming apparatus 101 can be controlled by the external controller 102. The HDD unit 208 stores various programs and data. The CPU 206 executes a program stored in the HDD unit 208 to control the overall operation of the printing unit 107. The memory 207 stores programs and data required when the CPU 206 performs various types of processing. The memory 207 operates as a work area for the CPU 206. The UI display unit 225 receives input of various settings and operation instructions from the user, and is used for display for print job management. For example, the UI display unit 225 displays a job management screen shown in FIG. 4, allowing the user to confirm or change print jobs. The job management screen shown in FIG. 4 displays a list of stored jobs and completed jobs. Stored jobs are jobs that have been submitted but have not been completed. Completed jobs is a list of jobs that have been completed. Each stored job and completed job includes a job identification number, a user name of a user who submitted the job, a file name used for the job, a number of pages to be printed, a number of copies, a total number of pages, and state information. The state information of the stored job includes a state indicating whether the job is in a hold state of waiting to be executed or a printing state of currently being executed.

The diagnosis unit 108 includes a communication I/F 211, a CPU 214, a memory 215, an HDD unit 216, the image reading units 331 and 332, and a UI display unit 241. These devices are connected via a system bus 219 so as to be able to transmit and receive data to and from each other. The communication I/F 211 is connected to the printing unit 107 via the communication cable 260. The CPU 214 performs communication required for controlling the diagnosis unit 108 via the communication I/F 211. The CPU 214 controls the operation of the diagnosis unit 108 by executing a control program stored in the memory 215. The memory 215 stores the control program for the diagnosis unit 108. The image reading units 331 and 332 read images from the transported recording medium according to instructions from the CPU 214. The CPU 214 performs diagnosis of whether or not there is an abnormal location in the image forming apparatus 101 based on the diagnostic read images read by the image reading units 331 and 332. In addition, in inspection, the CPU 214 inspects the printed recording medium for defects (abnormalities) based on the read images of the printed recording medium read by the image reading units 331 and 332.

The UI display unit 241 is used to display the results of the inspection diagnosis, sign diagnosis, and abnormality diagnosis, the execution status of automatic repair based on the diagnosis results, a setting screen, and the like. The operation unit also serves as the UI display unit 241, and for example, receives various instructions from the user, such as an instruction to change a setting of the diagnosis unit 108 and an instruction to execute inspection diagnosis, sign diagnosis, and abnormality diagnosis, in response to a user operation.

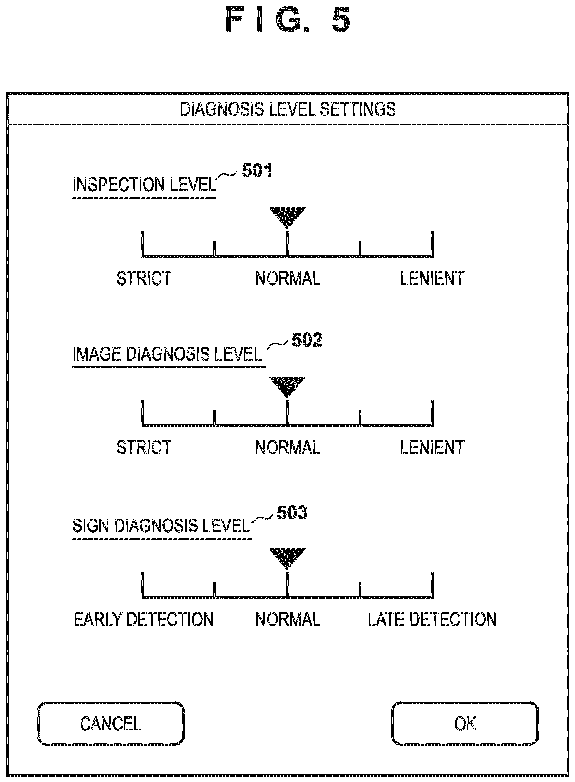

FIG. 5 shows an example of a setting screen for various image diagnosis levels. On the setting screen for the image diagnosis level, an inspection level 501, an image diagnosis level 502, and a sign diagnosis level 503 can be set. In the inspection level 501 and the image diagnosis level 502, the inspection level (threshold level) can be set in five stages from "strict" to "lenient". Among these threshold levels, the closer to "strict" the threshold level is, the stricter the level (threshold value) is set, and even slight abnormalities are detected as abnormalities in the test results. On the other hand, the closer to "lenient" the threshold level is, the looser the level (threshold value) is set, and even if there is some abnormality, it is judged as normal. Here, an example is shown in which the threshold level can be set in five stages, but it may be divided into two, three, seven, or other number of stages. In addition, with the sign diagnosis level 503, the inspection level can be set in five stages from "early detection" to "late detection". Among these levels, the closer to "early detection" the inspection level is, the stricter the threshold level is set, and even a slightly abnormal level will cause the test result to be detected as a sign or abnormality. On the other hand, the closer to "late detection" the inspection level is, the looser the threshold level is set, and if there is a slight abnormality, it will not be judged as a sign.

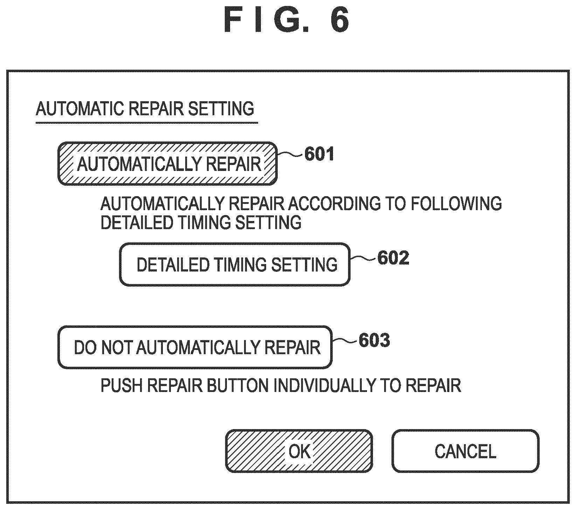

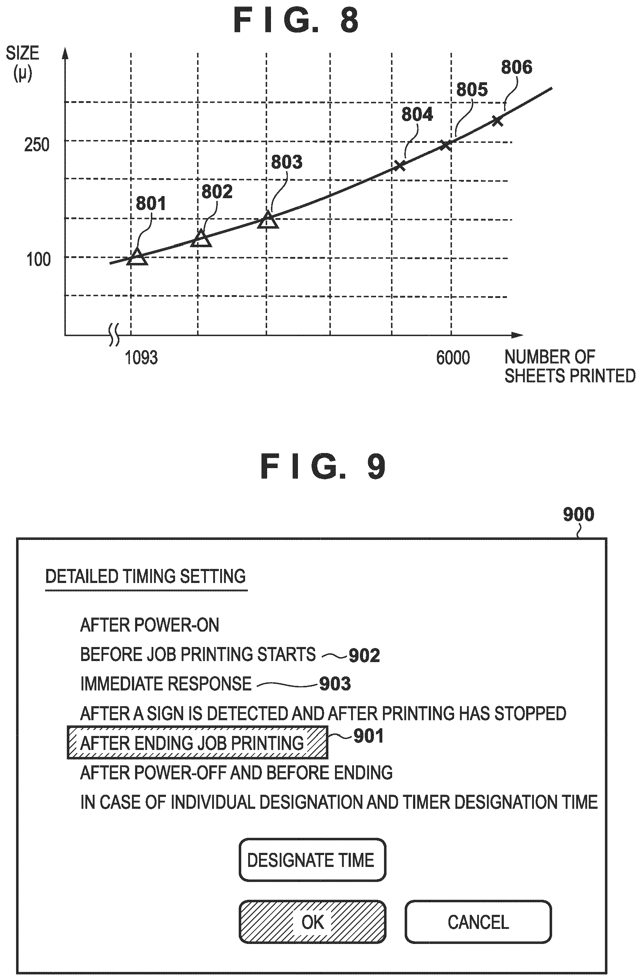

FIG. 6 shows an example of a setting screen for automatic repair setting for setting whether to automatically repair a sign or abnormality detected in the inspection diagnosis, sign diagnosis, and image diagnosis. On the screen for automatic repair setting, it is possible to set "automatically repair" 601 or "do not automatically repair" 603 when a sign or abnormality is detected in various types of diagnosis. Also, on this screen, it is possible to set "detailed timing setting" 602 for when executing automatic repair. Note that in this example, the automatic repair operation performed when a sign or abnormality is detected in sign diagnosis, image diagnosis, or the like is set collectively, but it may be possible to set it for each inspection. The case where "detailed timing setting" 602 is selected will be described later with reference to FIG. 9.

The description returns to FIG. 3. The HDD unit 216 stores various types of setting information and image data required for inspection diagnosis, sign diagnosis, and image diagnosis. The various types of setting information and image data stored in the HDD unit 216 can be reused. The stacker 109 controls whether the printed recording medium transported along the transport path is discharged to a stack tray, discharged to an escape tray, or transported to the finisher 110 connected downstream in the transport direction of the printed recording medium. The finisher 110 controls the transport and discharge of the printed recording medium, and performs finishing processing such as stapling, punching, or saddle stitching.

The external controller 102 includes a CPU 251, a memory 252, an HDD unit 253, a keyboard 256, a display unit 254, network I/Fs 255 and 257, and a video I/F 258. These devices are connected via a system bus 259 so as to be able to transmit and receive data to and from each other. The CPU 251 executes a program stored in the HDD unit 253 to control the overall operation of the external controller 102, such as reception of print data from the client PC 103, RIP processing, and transmission of the print data to the image forming apparatus 101. The memory 252 stores programs and data required when the CPU 251 performs various types of processing. The memory 252 operates as a work area for the CPU 251.

The HDD unit 253 stores various programs and data. The keyboard 256 is used for inputting operation instructions for the external controller 102 from the user. The display unit 254 is, for example, a display, and is used to display information about applications currently being executed in the external controller 102 and an operation screen. The network I/F 255 is connected to the client PC 103 via the external LAN 104, and is used for communicating data such as printing instructions. The network I/F 257 is connected to the image forming apparatus 101 via the internal LAN 105, and is used for communication of data such as printing instructions. The external controller 102 is configured to be able to communicate with the printing unit 107, the diagnosis unit 108, the stacker 109, and the finisher 110 via the internal LAN 105 and the communication cable 260. The video I/F 258 is connected to the image forming apparatus 101 via the video cable 106, and is used for communication of data such as image data (print data).

The client PC 103 includes a CPU 261, a memory 262, an HDD unit 263, a display unit 264, a keyboard 265, and a network I/F 266. These devices are connected via a system bus 269 so as to be able to transmit and receive data to and from each other. The CPU 261 executes programs stored in the HDD unit 263 to control the operation of each device via the system bus 269. This enables the client PC 103 to perform various types of processing. For example, the CPU 261 executes a document processing program stored in the HDD unit 263 to generate print data and issue a printing instruction. The memory 262 stores programs and data required when the CPU 261 performs various types of processing. The memory 262 operates as a work area for the CPU 261.

The HDD unit 263 stores, for example, various applications such as a word processing program, programs such as a printer driver, and various types of data. The display unit 264 is, for example, a display, and is used to display information about applications currently being executed in the client PC 103 and an operation screen. The keyboard 265 is used for inputting operation instructions for the client PC 103 from the user. The network I/F 266 is communicably connected to the external controller 102 via the external LAN 104. The CPU 261 communicates with the external controller 102 via the network I/F 266.

Sign Level and Abnormality Level

The sign diagnosis level and the image diagnosis level will be described with reference to FIG. 8. FIG. 8 shows an example of the relationship between the size of a spot (sign) and the number of sheets printed, which is not included in the original data. The vertical axis indicates the size of a spot, and the horizontal axis indicates the number of sheets to be printed. The original data corresponds to image data to be used when printing. In the case of an abnormal spot, the spot (sign), which is the core of an abnormality, suddenly appears at a certain number of sheets, and generally increases in size as the number of sheets increases. When the size reaches a certain size or more, the user can recognize it as an abnormality.

Since recognition is normally possible at 250 μ and above, when the image diagnosis level 502 is "normal" in FIG. 5, the size at × point 805 in FIG. 8 is the minimum size for abnormality determination at the image diagnosis level. That is, anything at or above 250 μ is determined as an abnormality. When the image diagnosis level 502 is "strict", the size at × point 804 in FIG. 8 is the minimum size for abnormality determination at the image diagnosis level. That is, anything at or above 225 μ is determined as an abnormality. When the image diagnosis level 502 is "lenient", the size at × point 806 in FIG. 8 is the minimum size for abnormality detection at the image diagnosis level. That is, anything at or above 275 μ is determined as an abnormality.

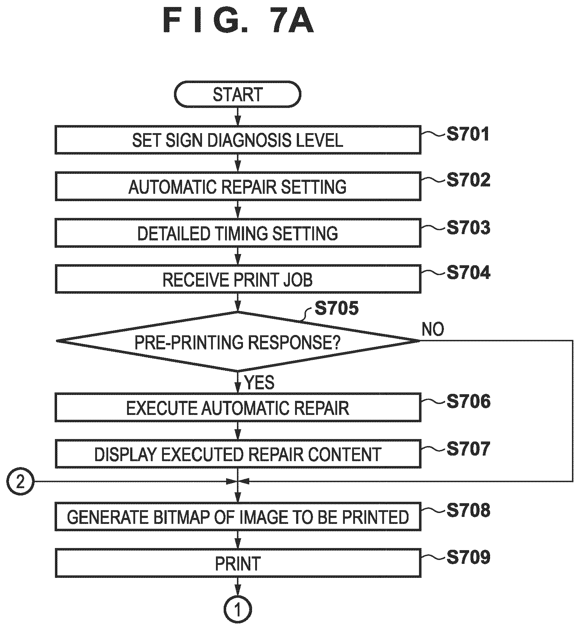

From the user's perspective, since an output containing an abnormality cannot be sold as a product, it is desirable to remove the core (sign) of an abnormality before it grows to become an abnormality. In view of this, a sign that is not yet an abnormality and has a small spot size is detected, and the part that is the causal factor of the sign is repaired in advance so as to remove the core (sign) of the abnormality. Procedures for sign diagnosis processing and repair processing will be described with reference to FIGS. 7A-7B.

When the sign diagnosis level 503 in FIG. 5 is "normal", the size at triangular point 802 in FIG. 8 is the minimum size for sign determination at the sign diagnosis level. That is, anything at or above 125 μ is determined as a sign. When the sign diagnosis level 503 in FIG. 5 is "early detection", the size at triangular point 801 in FIG. 8 is the minimum size for sign determination at the sign diagnosis level. That is, anything at or above 100 μ is determined as a sign. In addition, with early detection, the number of sheets from the triangle of the sign size to the × of the abnormality size increases, and automatic repair is performed at an early time, and therefore the frequency of performing repair increases. When the sign diagnosis level 503 in FIG. 5 is "late detection", the size at triangular point 803 in FIG. 8 is the minimum size for sign determination at the sign diagnosis level. That is, anything at or above 150 μ is determined as a sign. In addition, with late detection, the number of sheets from the triangle of the sign size to the × of the abnormal size decreases, and automatic repair will be performed at a late time, and therefore the frequency of performing repair decreases. As described above, the sign diagnosis level and the image diagnosis level are different levels.

Sign Diagnosis Processing and Repair Processing

The processing procedures of the sign diagnosis processing and repair processing according to this embodiment will be described with reference to FIGS. 7A-7B. The symbol "S" in the description of the flowcharts represents a step. The same applies to the following description of the flowcharts. The processing described hereinafter is executed by the CPU 206 of the printing unit 107, the CPU 214 of the diagnosis unit 108, and the CPU 251 of the external controller 102. Here, a mode will be described in which various CPUs execute the processing described below in an interlinked manner, but it is also possible to use a mode in which a single integrated CPU provided in the image forming apparatus executes all of the processing.

In S701, the CPU 214 of the diagnosis unit 108 sets the sign diagnosis level setting of the user mode via the UI display unit 241 that also serves as an operation unit, based on the sign diagnosis level 503 in the diagnosis level setting of FIG. 5. Here, description will be given with the UI setting of the user, but a service technician can also perform setting from a service mode. Note that control relating to setting may be performed by the CPU 251 of the external controller 102.

In S702, the CPU 214 sets the automatic repair setting of the user mode via the UI display unit 241 that also serves as the operation unit, based on the automatic repair setting of "automatically repair" 601 or "do not automatically repair" 603 in FIG. 6. When "do not automatically repair" 603 is selected, repair can be performed by individually operating a repair button (not shown). Here, description will be given with the UI setting of the user, but a service technician can also perform setting from a service mode.

In S703, the CPU 214 sets the detailed timing setting of the user mode via the UI display unit 241, which also serves as an operation unit, based on "after job printing ends" 901 set in the detailed timing setting in FIG. 9. Here, description will be given with the UI setting of the user, but a service technician can also perform setting from a service mode. Here, if the detailed timing setting has not been performed, when a sign is detected, printing performed by the image forming apparatus needs to be interrupted and repair work needs to be performed in order to execute the repair operations sequentially. That is, since printing cannot be performed during the repair work, the user cannot print printed material until the repair work is completed, which reduces productivity.

In S704, the CPU 251 of the external controller 102 receives the print job designated by the print instruction. Next, in S705, the CPU 251 judges whether or not a pre-printing response is required. Specifically, if "before job printing starts" 902 is selected in the detailed timing setting in S703, and if the content of repair performed previously in S721, which will be described later, has been stored, the processing advances to S706. On the other hand, if "before job printing starts" has not been selected in the detailed timing setting in S703, the processing advances to S708.

In S706, the CPU 206 of the printing unit 107 executes automatic repair based on the repair content previously stored in S721, which will be described later. The automatic repair will be described in detail later. Next, in S707, the CPU 206 displays the content of the automatic repair performed in S706 on the UI display unit 241, and the processing advances to S708.

In S708, the CPU 251 of the external controller 102 generates a bitmap for rasterizing and printing the pages to be printed for the print job received in S704. Next, in S709, the CPU 251 transmits the rasterized bitmap data from the video I/F 258 through the video cable 106 to the video I/F 205 of the printing unit 107. Furthermore, the CPU 206 of the printing unit 107 performs printing based on the image data of the bitmap data received by the video I/F 205.

In S710, the CPU 214 of the diagnosis unit 108 judges whether or not the sign diagnosis timing has been reached. Specifically, the CPU 214 checks the setting information for the sign diagnosis timing, and if it is judged that the timing for performing sign diagnosis has been reached, the processing advances to S711, and if it is judged that the timing has not been reached, the processing advances to S723. The sign diagnosis timing refers to the timing for judging a sign, and is judged based on the setting of the sign diagnosis level 503 described with reference to FIG. 5. The number of sheets from when a sign is not yet an abnormality of the printer until when the sign becomes an abnormality is in units of at least 1000 sheets, as shown in FIG. 8. For this reason, it is sufficient that the sign diagnosis timing is reached every several hundred sheets, and therefore the timing is checked.

In S711, the CPU 214 changes the resolution and the like such that a bitmap rasterized for printing can be differentially compared with a print image obtained by reading the printed material in later-described S712, and generates a reference image to be used for print comparison. Next, in S712, the CPU 214 executes processing for reading the printed material with the image reading units 331 and 332. The read image is stored in the HDD unit 216 of the diagnosis unit 108 as a diagnostic image. Once the diagnostic image is stored, the processing advances to S713. In S713, the CPU 214 compares the reference image with the read diagnostic image, and generates differential image data for determining an abnormality in the printing unit 107. In S714, the CPU 214 acquires characteristic information such as the shape and period of the difference from the differential image data generated in S713, and performs diagnosis of a sign that is a sign of an abnormality. If a sign is found based on the result of sign diagnosis, the processing advances to S715, and if no sign is found, the processing advances to S723.

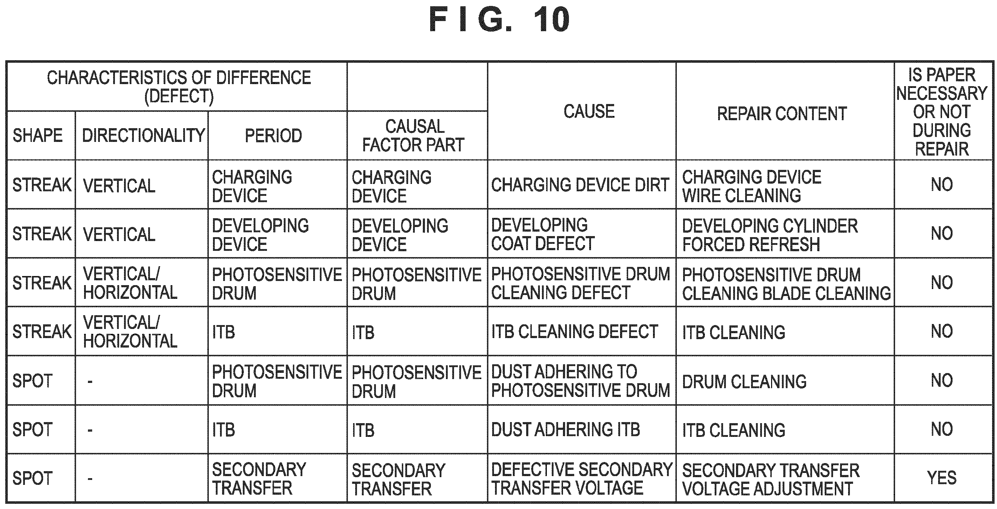

In S715, the CPU 214 specifies the part that is the causal factor of the sign of the abnormality, based on the characteristic information of the difference region. Specifically, the CPU 214 selects a combination that has the same color and has a high degree of similarity from within the difference region, and specifies which part is abnormal based on the period information of the selected combination. An example of a causal factor part and a cause is shown in FIG. 10. As shown in FIG. 10, the feature information of the difference region includes information on the shape, directionality, and period. The CPU 214 specifies the causal factor part based on the period information, and the cause is specified based on the shape and directionality thereof. When the cause is specified, the repair content is determined. For example, it is preferable that the diagnosis unit 108 stores the information of the table shown in FIG. 10 in advance in the HDD unit 216 and specifies the causal factor part and cause according to the characteristic information of the detected difference region. In S716, the CPU 214 checks the detailed timing setting set in S703. In S717, the CPU 214 judges whether or not the detailed timing setting made in S703 is "immediate response". If the setting is "immediate response", the processing advances to S718, and if not, the processing advances to S721.

In step S718, the CPU 214 stops printing since automatic repair is an immediate response when a sign is detected. Next, in step S719, the CPU 214 notifies the printing unit 107 of the causal factor part and the repair content corresponding to the cause shown in FIG. 10, and executes the corresponding repair content with the printing unit 107. When automatic repair is executed, it is desirable that the information on the repair content and repair timing stored in the HDD unit 216 is deleted from the memory. This makes it possible to avoid redundant and unnecessary automatic repair processing when a plurality of automatic repair timings are set, or the like. The repair content will be described later. In S720, the CPU 214 displays the content of the repair performed in S719 on the UI display unit 241, and the processing advances to S723.

On the other hand, if the setting is not "immediate response", in S721, the CPU 214 stores the part and repair content specified in S715 and the timing confirmed in S717 in the HDD unit 216. Furthermore, in S722, the CPU 214 displays the specified part, the repair content, and the timing stored in S721 on the UI display unit 241, and advances to S723.

In S723, the CPU 251 of the external controller 102 judges whether or not printing of all pages of the print job has ended. If it has ended, the processing advances to S724, and if it has not ended, the processing advances to S708. In step S724, the CPU 214 of the diagnosis unit 108 judges whether or not the detailed timing setting set in step S703 is "after job printing ends" 901. If a response after the end of job printing has been set, the processing advances to S725, and if not, the processing of this flowchart ends. In S725, the CPU 214 notifies the printing unit 107 of the repair content corresponding to the causal factor in FIG. 10, and executes the corresponding repair content in the printing unit 107. Next, in S726, the CPU 214 displays the content of the repair performed in S725 on the UI display unit 241, and ends the processing of this flowchart.

Image Diagnosis Processing and Repair Processing

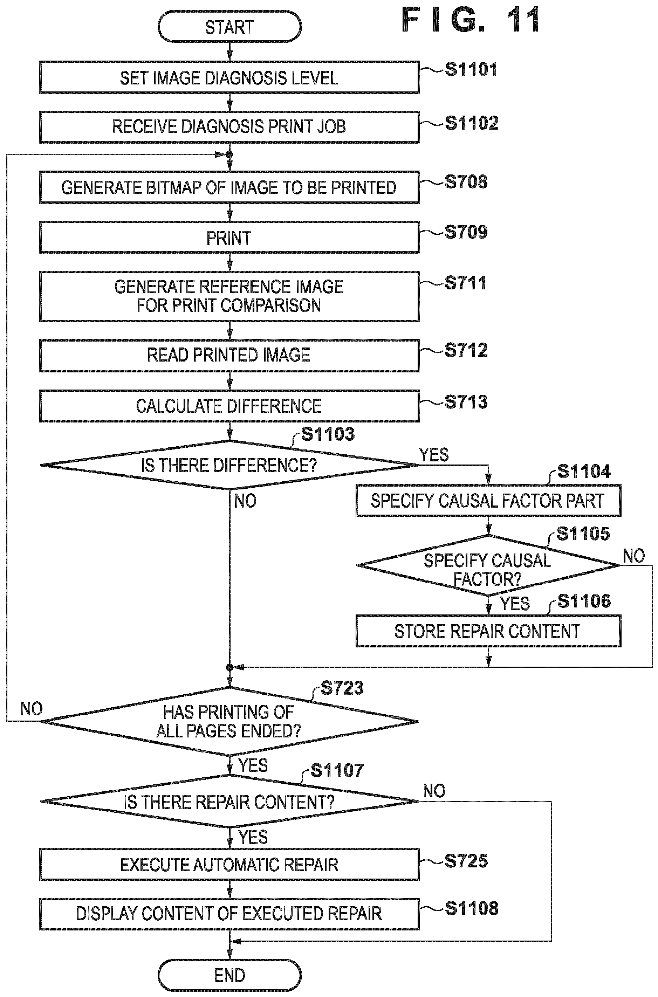

Sign diagnosis and repair processing have been described with reference to FIGS. 7A-7B above. Since a sign is used to find a state before becoming an abnormality, there is a grace period before performing correction after finding the sign. However, if an abnormality is detected, there is no grace period and immediate response is required. Hereinafter, with reference to FIG. 11, image diagnosis processing and repair processing will be described in order to describe differences from the sign diagnosis processing. FIG. 11 starts when the printing unit 107 issues an instruction for image diagnosis processing. The same controls as those in the flowchart of FIGS. 7A-7B are denoted by the same reference numerals and description thereof will be omitted. The processing described hereinafter is executed by the CPU 206 of the printing unit 107, the CPU 214 of the diagnosis unit 108, and the CPU 251 of the external controller 102. Here, a mode will be described in which various CPUs execute the processing described below in cooperation with each other, but it is also possible to use a mode in which a single integrated CPU provided in the image forming apparatus executes all of the processing.

In step S1101, the CPU 214 of the diagnosis unit 108 sets the image diagnosis level setting of the user mode via the UI display unit 241 that also serves as an operation unit, based on the image diagnosis level 502 in the diagnosis level setting of FIG. 5. Here, description will be given with the UI setting of the user, but a service technician can also perform setting from a service mode. In step S1102, the CPU 251 of the external controller 102 receives a print job for performing diagnosis of an abnormality. For example, the print job includes a chart for image diagnosis shown in FIG. 13. Next, in S708, the CPU 251 generates a bitmap for rasterizing and printing the page to be printed. In S709, the CPU 251 transmits the rasterized bitmap data from the video I/F 258 through the video cable 106 to the video I/F 205 of the printing unit 107. The CPU 206 of the printing unit 107 performs printing based on the image data of the bitmap data received by the video I/F 205. When printing is completed, the processing advances to S711, unlike in the flowchart of FIGS. 7A-7B. Since steps S711 to S713 are the same as the control described with reference to the flowchart in FIGS. 7A-7B, description thereof is omitted.

When the differential image data is generated in S713, in S1103, the CPU 214 of the diagnosis unit 108 performs diagnosis of an abnormality based on characteristic information such as the shape and period of the difference from the differential image data. If an abnormality is found based on the abnormality diagnosis result, the processing advances to S1104, and if not, the processing advances to S723.

In S1104, the CPU 214 specifies the part that is a causal factor of the abnormality based on the characteristic information of the difference region. Specifically, the CPU 214 selects a combination that has the same color and has a high degree of similarity from within the difference region, and specifies which part is abnormal based on the period information of the selected combination. The specification method is the same as in the control described in S715 above, and therefore detailed description is omitted. Next, in S1105, the CPU 214 judges whether or not the causal factor has been specified. If the causal factor was specified, the processing advances to S1106, and if the causal factor was not specified, the processing advances to S723. In S1106, the CPU 214 stores the part specified in S1105 and the repair content in the HDD unit 216, and the processing advances to S723.

In S723, the CPU 251 of the external controller 102 judges whether or not printing of all pages of the print job for performing diagnosis of an abnormality has been completed. If it has ended, the processing advances to S1107, and if it has not ended, the processing advances to S708. In S1107, the CPU 214 of the diagnosis unit 108 advances to S725 if there is repair content stored in S1106, and ends the processing of this flowchart if there is no stored repair content. In S725, the CPU 214 notifies the printing unit of the repair content corresponding to the causal factor in FIG. 10, and the printing unit executes the corresponding repair content. If there are a plurality of pieces of repair content, repair is performed sequentially. Furthermore, in S1108, the CPU 214 displays the content of the repair executed in S725 on the UI display unit 241, and ends the processing of this flowchart.

Repair Processing When Abnormality is Found in Inspection Processing

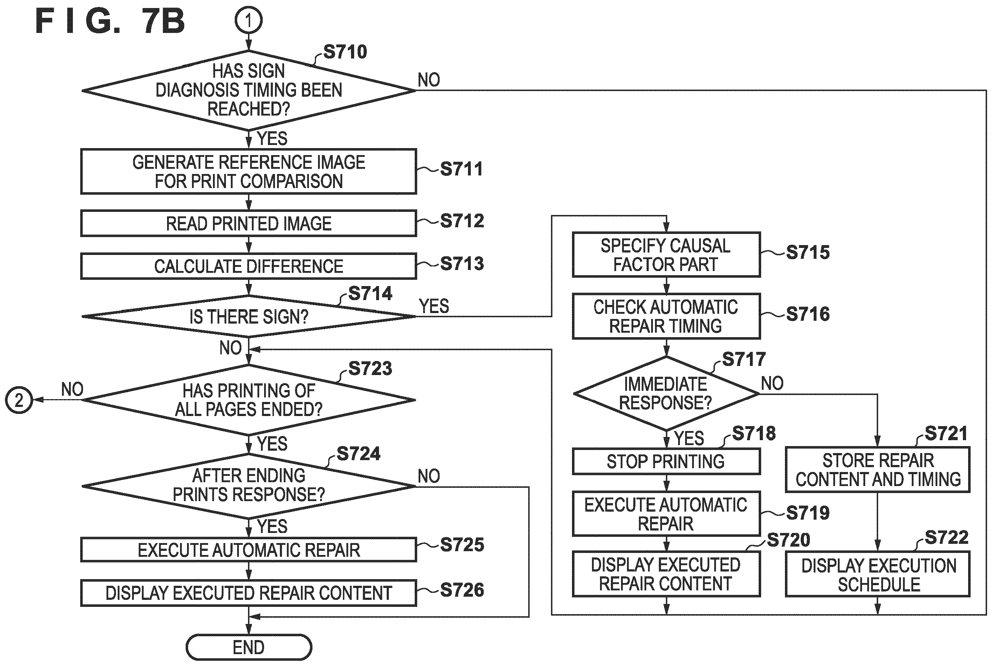

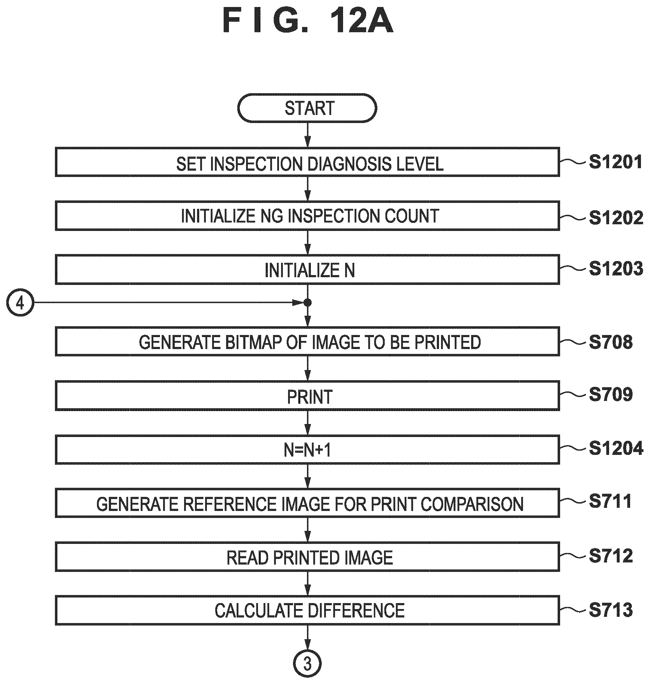

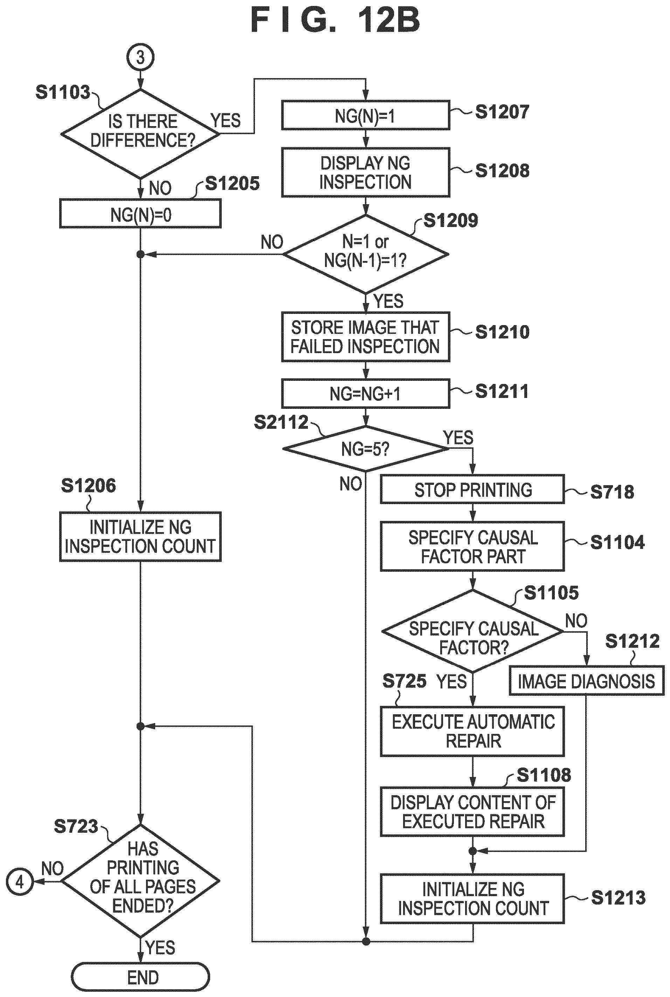

Sign diagnosis and image diagnosis have been described with reference to FIGS. 7 and 11 above. Abnormalities can also be detected during inspection, and the processing procedure for performing image diagnosis and repair based on an abnormality detected during inspection will be described with reference to FIGS. 12A-12B. FIGS. 12A-12B are started by a print instruction from the printing unit 107 in a state where inspection diagnosis and image diagnosis have been set in advance. The same controls as those in the flowcharts of FIGS. 7A-7B and FIG. 11 are denoted by the same reference numerals and description thereof is omitted. The processing described hereinafter is executed by the CPU 206 of the printing unit 107, the CPU 214 of the diagnosis unit 108, and the CPU 251 of the external controller 102. Here, a mode will be described in which various CPUs execute the processing described below in an interlinked manner, but it is also possible to use a mode in which a single integrated CPU provided in the image forming apparatus executes all of the processing.

In S1201, the CPU 214 of the diagnosis unit 108 sets the inspection diagnosis level setting of the user mode via the UI display unit 241 that also serves as an operation unit, based on the inspection level 501 in the diagnosis level setting of FIG. 5. Here, description will be given with the UI setting of the user, but a service technician can also perform setting from a service mode. Even if the result of inspection diagnosis is failure, there are also cases where the abnormality is not a printer abnormality but occurs suddenly. In view of this, in S1202, the CPU 214 initializes a counter NG that counts the number of consecutive occurrences of inspection failures to NG=0 in order to confirm that the inspection failure is not a sudden occurrence. Furthermore, in step S1203, the CPU 214 initializes a counter N for counting the number of pages to be printed to N=0.

In S708, the CPU 251 of the external controller 102 generates a bitmap for rasterizing and printing the page to be printed. Next, in S709, the CPU 251 transmits the rasterized bitmap data from the video I/F 258, through the video cable 106, to the video I/F 205 of the printing unit 107. The CPU 206 of the printing unit 107 performs halftone processing on the bitmap data received by the video I/F 205, and the print unit 203 performs printing based on the image data resulting from the halftone processing.

In S1204, the CPU 214 of the diagnosis unit 108 increments the counter N for counting the number of printed pages by N=N+1. Next, in S711, the CPU 214 changes the resolution and other factors such that the bitmap rasterized for printing can be differentially compared with the print image obtained by reading the printed material in S712 (described later), and generates a reference image to be used for print comparison. In S712, the CPU 214 executes processing for reading the printed material with the image reading units 331 and 332. The read image is stored in the HDD unit 216 of the diagnosis unit 108 as a diagnostic image. When the diagnostic image is stored, the processing advances to S713. In S713, the CPU 214 compares the reference image for printing comparison with the read diagnostic image, and generates differential image data for determining an abnormality in the printing unit 107.

In S1103, the CPU 214 performs abnormality diagnosis based on characteristic information such as the shape and period of the difference from the differential image data in S713. If an abnormality is found based on the abnormality diagnosis result, the processing advances to S1207, and if not, the processing advances to S1205. In step S1205, the CPU 214 counts the number of times inspection has failed, and sets NG(N) to NG(N)=0 since the inspection has not failed on page N. Next, in S1206, since the inspection was not failed, the CPU 214 initializes a counter NG for counting the number of consecutive failed inspections to NG=0, and advances to S723. That is, NG(N) is a variable indicating whether or not a failed inspection was detected on the Nth page, and NG is a variable indicating the number of consecutive occurrences of failed inspection.

On the other hand, in step S1207, the CPU 214 counts the number of occurrences of failed inspection, and therefore sets NG(N)=1 since a failed inspection was detected on the Nth page. Furthermore, in S1208, the CPU 214 displays on the UI display unit 241 that a failed inspection has been detected. Next, in S1209, the CPU 214 determines whether N=1, or the previous page has consecutively failed inspection, and if so, the CPU 214 advances to S1210, and if not, the CPU 214 advances to S1206.

In S1210, the CPU 214 stores the image that failed inspection in the HDD unit 216. Next, in step S1211, the CPU 214 increments a counter NG for counting the number of consecutive occurrences of failed inspection by NG=NG+1. In S1212, the CPU 214 judges whether or not the number of consecutive occurrences of failed inspection has reached five (a predetermined number of occurrences). If the number of consecutive occurrences reaches 5, the processing advances to S718, and if not, the processing advances to S723. Here, a case was described in which the threshold value for judging that a failed inspection is not a sudden occurrence is five consecutive occurrences. However, this is not intended to limit the present invention, and any number of occurrences can be set.

In step S718, the CPU 214 judges that an abnormality has occurred in a device, and stops printing performed by the printing unit 107. Next, in S1104, the CPU 214 specifies the part that is the causal factor of the abnormality based on the characteristic information of the difference region. Specifically, the CPU 214 selects a combination that has the same color and has a high degree of similarity from within the difference region, and specifies which part is abnormal based on the period information of the selected combination. The specification method is the same control as in S715 described above, and therefore detailed description thereof will be omitted.

In S1105, if the CPU 214 specified the causal factor in S1104, the processing advances to S725, and if not, the processing advances to S1212. In S725, the CPU 214 notifies the printing unit 107 of the repair content corresponding to the causal factor in FIG. 10, and executes the corresponding repair content in the printing unit 107. If there are a plurality of pieces of repair content, they are repaired in order. Next, in S1108, the CPU 214 displays the content of the repair performed in S725 on the UI display unit 241, and ends the processing of this flowchart. On the other hand, in S1212, since the CPU 214 cannot specify the causal factor in the image that failed inspection, the CPU 214 executes the processing flow of the image diagnosis processing described with reference to FIG. 11, and advances to S1213.

In S1213, the CPU 214 initializes a counter NG for counting the number of consecutive occurrences of failed inspection to NG=0, and advances to S723. In S723, the CPU 251 of the external controller 102 checks whether printing of all pages of the job to be printed has ended, and if so, ends the processing of this flowchart, and if not, advances to S708.

Execution Timing of Repair Processing

An example of timing setting for repairing the difference (sign) of the diagnosis result according to this embodiment will be described with reference to FIG. 9. When a sign is detected, repair can be performed at a plurality of timings since there is a grace period before the sign becomes an abnormality. Accordingly, in the printing system according to this embodiment, the timing setting can be received via a setting screen 900 shown in FIG. 9. The setting screen 900 may be displayed, for example, on the UI display unit 241 of the diagnosis unit 108, or on the display units 264 and 254 of the client PC 103 and the external controller 102. According to input performed by the user via the setting screen 900, the diagnosis unit 108 sets the repair timing for when a sign is detected.

As shown in FIG. 9, for example, when "after power-on" is set, the unexecuted repair content is executed after the image forming apparatus 101 is powered on and starts up. When "before job printing starts" is set, when a print job is received, unexecuted repair content is executed before printing. When "immediate response" is set, as described in FIGS. 7A-7B, printing is stopped as soon as a sign is found, and the repair content for the found sign is executed.

When "after a sign is detected and after printing has stopped" is set, the repair content for the found sign will be executed at a timing when printing stops after a sign is found. If this is set to "after job printing ends", the repair content of the found sign is executed at the timing when the print job that was being executed when the sign was found has finished being output. If "before power-off" is set, when the power-off button is operated to shut down the image forming apparatus 101, unexecuted repair content is executed before the image forming apparatus 101 actually shuts down. In the case of individual designation, when the timer designation time is set, the user can individually operate an individual correction execution button (not shown) to set the execution timing desired by the user. At the timer designation time, unexecuted repair content is executed after printing stops after the time at which the execution time was designated with the time designation button. Note that the timing shown in FIG. 9 is an example of the present invention and does not limit the present invention. In addition, a plurality of these timings may be set simultaneously. In this case, when the set execution timing arrives, if unexecuted repair content has been stored, the unexecuted repair content will be executed.

Repair Content

Referring to FIG. 10, description will be given of causal factor parts and their repair contents based on the characteristics of the difference (sign or abnormality) in the diagnosis result according to this embodiment. The table shown in FIG. 10 is stored in the HDD unit 216 of the diagnosis unit 108, and is used when specifying the causal factor part and its repair content according to the difference in the diagnosis results.

Using this table, the causal factor parts and causes are specified from the shapes (streaks or spots), the directionality of the shapes, and the periods corresponding to the signs and abnormalities of the detected differential images. For example, if a linear streak occurs in the horizontal direction, the photosensitive drum is specified as the causal factor part based on the characteristic (period) of the streak. In this case, since streaks are formed, it is thought that the cause of the streaks is dirt or the like adhering to a cleaning blade that cleans the photosensitive drum, and it is judged that the cleaning of the photosensitive drum is defective. Based on the causal factor part and the cause, cleaning of the cleaning blade of the photosensitive drum is selected as the repair content, and repair is performed by carrying out this cleaning.

A case will also be described in which spot-like shapes occur and the photosensitive drum is specified as the causal factor part based on the characteristics (period) of the spots. In this case, since spots are formed, it is thought that the cause is dust or the like adhering to the photosensitive drum, and it is judged that dust has adhered to the photosensitive drum. Based on the causal factor part and the cause, cleaning of the photosensitive drum is selected as the repair content, and repair is performed by carrying out cleaning.

In this manner, according to this embodiment, the cause is specified based on the shape and directionality of the sign or abnormality, and repair content appropriate to the cause is selected and executed, whereby repair is performed. It goes without saying that the contents shown in FIG. 10 are only a part of the repair contents and do not limit the present invention.

Sign Image Diagnosis Setting

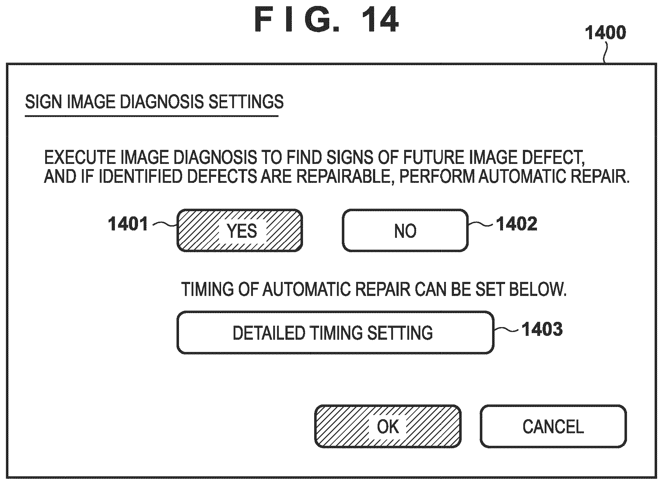

An example of a setting screen for sign image diagnosis according to this embodiment will be described with reference to FIG. 14. The setting screen 1400 may be displayed, for example, on the UI display unit 241 of the diagnosis unit 108, or on the display units 264 and 254 of the client PC 103 and the external controller 102.

Sign image diagnosis is performed during printing, and the user can operate buttons 1401 and 1402 in advance to select whether or not to automatically repair a found sign. If the user has not made any setting, the button 1401 is selected as the default setting. In addition, when the button 1403 is selected to perform automatic repair, the timing of automatic repair is set via a detailed timing setting screen 900 shown in FIG. 9. Detailed timing settings can be set at various timings, such as a timing when a sign is found, a timing when a job is designated, or a timing when an unexecuted automatic repair log is displayed. In addition, the present invention is not intended to be limited to the sign image diagnosis setting shown in FIG. 14.

As described above, in response to a user operation, the diagnostic apparatus according to the present embodiment selects and sets the timing for repairing the image forming unit when a sign indicating that the image forming unit is abnormal is detected. In addition, the diagnostic apparatus performs diagnosis of an abnormality and a sign thereof of the image forming unit based on the image formed by the image forming unit, and when a sign of an abnormality is detected, the diagnostic apparatus executes repair processing of the image forming unit at a set timing. According to this embodiment, the user can select the timing for repairing a sign of an abnormality found in the diagnosis, whereby repair can be performed at a timing that suits the user, and a decrease in user productivity can be prevented. Note that in the present embodiment, a mode was described in which the repair timing is set when a sign of an abnormality is detected, but this is not intended to limit the present invention. For example, in the present invention, even when an abnormality is detected, automatic repair is not performed immediately, but the timing for performing automatic repair may be set according to a user setting. In this case, when an abnormality that requires immediate response is detected, automatic repair may be performed immediately, and when an abnormality that does not require immediate response is detected, automatic repair may be performed at a timing according to a user setting. Note that a mode in which the repair timing is set individually depending on the type of abnormality will be described in detail in the second embodiment below. In the second embodiment as well, a case where a sign of an abnormality is detected will be described, but this is not intended to limit the present invention, and the present invention may also be applied to a case where an abnormality is detected.

In addition, the above-described diagnostic apparatus may be provided in various apparatus configurations. For example, the above-described diagnostic apparatus may be provided as an apparatus included in an image forming apparatus having an image forming unit and a reading unit, or may be provided as an apparatus separate from the image forming apparatus. Alternatively, the above-described diagnostic apparatus may be provided integrally with the image forming apparatus 101 together with the external controller 102. Note that if the diagnostic apparatus is configured as an apparatus separate from the image forming apparatus, the recording medium printed by the image forming apparatus is read by a scanner inside or outside of the image forming apparatus, and the read image is acquired to perform diagnosis.

Second Embodiment

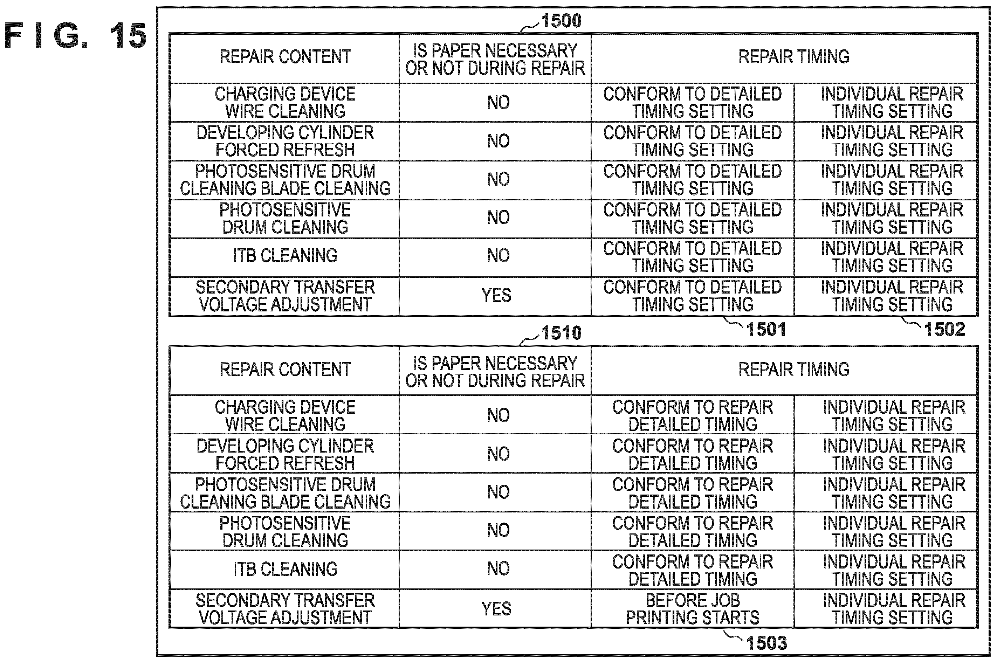

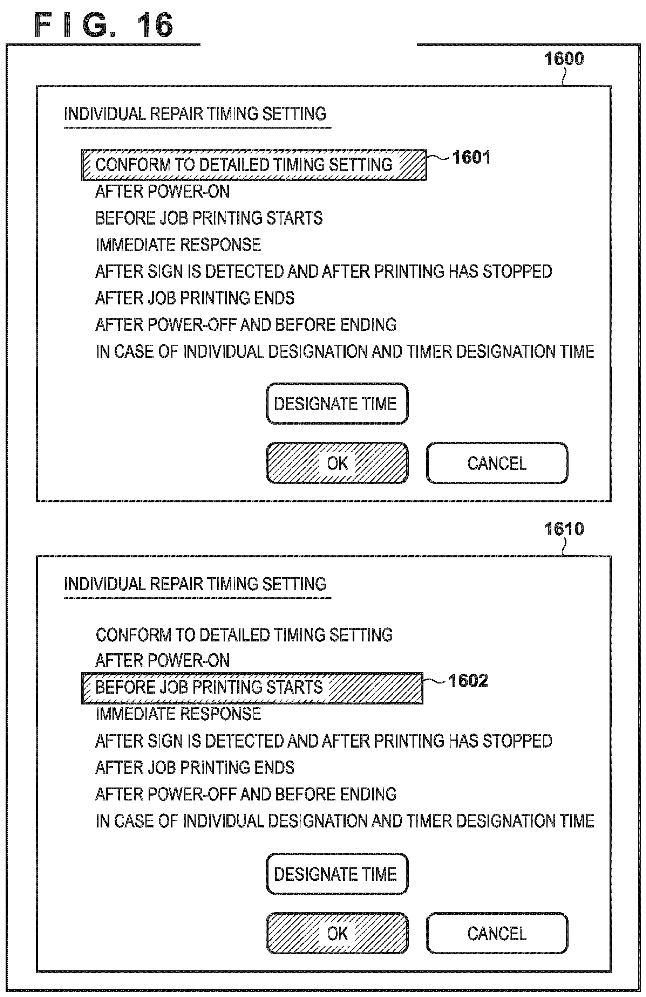

A second embodiment of the present invention will now be described. In the first embodiment above, an example has been described in which repair is performed at a timing selected by the user with any repair content, regardless of the repair content for repairing a sign found in the sign diagnosis. In this embodiment, an example in which the timing of repair can be selected individually for each of the repair contents described with reference to FIG. 10 will be described with reference to FIG. 15 and FIG. 16. FIG. 15 shows a UI screen for individual repair content, repair timing status, and individual repair timing settings. FIG. 16 shows a UI screen for setting individual repair timing.

On setting screens 1500 and 1510 shown in FIG. 15, the repair timing can be set for each piece of repair content. In addition, the repair timing can be set individually for each piece of repair content in the individual repair timing setting (1502). As the default standard setting, as shown in the setting screen 1500, each piece of repair content conforms to the detailed timing setting (1501). Also, as shown in FIG. 16, on the individual correction timing setting screen 1600, "conform to detailed timing setting" (1601) is selected. That is, repair is executed at the timing set on the detailed timing setting screen 900 described with reference to FIG. 9.

Normally, as shown in the setting screens 1500 and 1510, paper is often not required for repair. However, in the secondary transfer voltage adjustment, during repair, printing is performed on paper while changing the transfer current, and repair is performed when an appropriate transfer voltage is detected. For this reason, it is desirable to perform repair using the paper on which printing will actually be performed. In view of this, if the repair content is secondary transfer voltage adjustment, as shown in the setting screen 1510, it is possible to change the repair content to "before the start of job printing" (1503) and perform repair. In actuality, the repair content can be changed by selecting "before job printing starts" (1602) in the individual repair timing setting on the setting screen 1610. Note that in actuality, the transfer voltage is corrected depending on the paper, but when starting printing by changing the type of paper to be printed on, more accurate repair can be performed by setting the repair content to "before job printing starts" (1602). On the other hand, if paper is not used, it does not matter when repair is performed since there is no difference resulting from the paper. Accordingly, the same effect can be obtained even if it is possible to select the timing depending on whether the repair content involves the use of paper or not.

As described above, the diagnostic apparatus according to the present embodiment can individually set the timing for repairing the image forming unit for each piece of content of automatic repair. According to this embodiment, the repair timing can be selected according to the repair content (or the type of abnormality), thereby making it possible to improve the repair effect. Also, since the repair timing can be set individually according to the repair content and the type of abnormality, a more user-friendly system of operation can be provided.

Third Embodiment

A third embodiment of the present invention will be described hereinafter. In the above first and second embodiments, an example was described in which the user selects the timing for repairing a sign found in sign diagnosis, and repair is carried out according to the selected timing. However, if a sign is found and then a large number of pages are printed before the selected repair timing arrives, there is a high likelihood that the sign will become an abnormality before repair. At that time, if inspection is being carried out, the abnormality will be determined as unacceptable during inspection, and the printed material will be discharged to the escape tray 346 as waste paper, resulting in paper being wasted. In view of this, in this embodiment, in order to prevent an abnormality, the print count from when a sign is detected until when it becomes an abnormality is predicted, and repair is forcibly performed before the sign becomes an abnormality, before the predicted predetermined number of pages, separate from the selected timing.

Forced Execution Setting

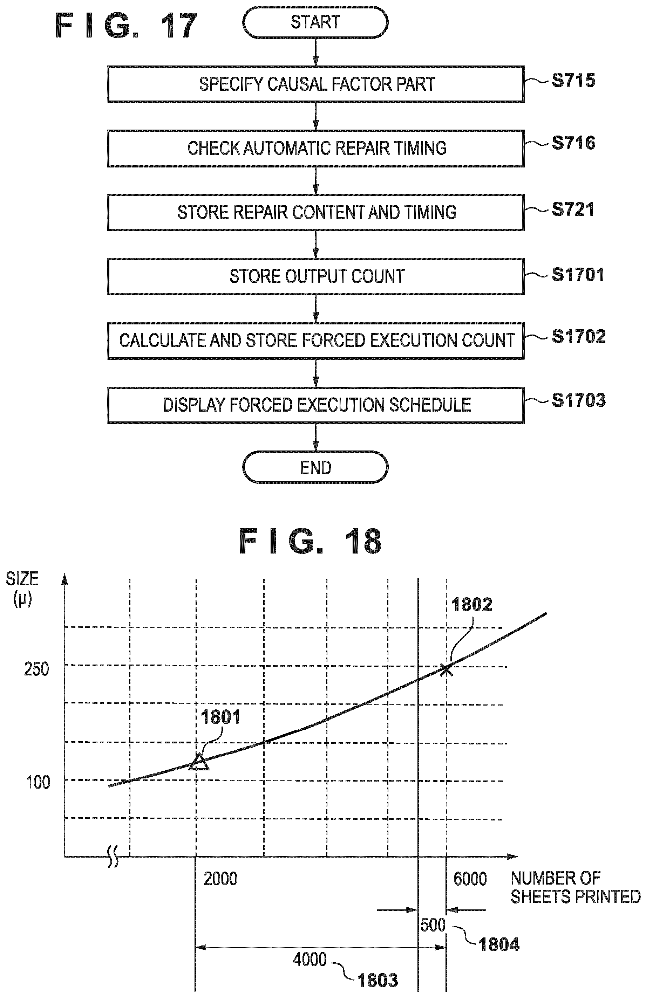

Processing for setting forced execution of automatic repair according to this embodiment will be described with reference to FIG. 17. The symbol "S" in the description of the flowcharts represents a step. The same controls as those in the flowchart of FIGS. 7A-7B are denoted by the same reference numerals and description thereof is omitted. The processing described hereinafter is executed by the CPU 214 of the diagnosis unit 108.

First, in S715, the CPU 214 of the diagnosis unit 108 specifies the part that is the causal factor of the sign based on the characteristic information of the difference region. A combination that has the same color and high similarity is selected from the difference region, and the part that is abnormal is specified based on the periodic information of the selected combination. In S716, the CPU 214 checks the detailed timing setting set in S703 of FIG. 7A. In S721, the CPU 214 stores the part and repair content specified in S715 of FIG. 7B and the timing check in S717 of FIG. 7B in the HDD unit 216.

In S1701, the CPU 214 stores the print output count (number of image forming) of the printing unit 107 in which a sign has been detected, in the HDD unit 216. FIG. 18 shows the relationship between the print counter when a sign is detected and the print counter when an abnormality is predicted. The vertical axis indicates the size of the spot that is the sign, and the horizontal axis indicates the number of sheets printed. In the example of FIG. 18, the print output count is 2000 when the sign is detected (1801), and therefore, in S1701, the CPU 214 stores 2000 in the HDD unit 216 as the print output count.

In S1702, the CPU 214 predicts that the print count (number of image forming) up to when the size changes from the sign size 1801 to the abnormality size 1802 will be 4000 (1803). For example, the CPU 214 can obtain the value from a value (e.g., information corresponding to a graph as shown in FIG. 18) that is stored in advance as the predicted value based on the sign size. Based on this graph, when the predetermined number of sheets for performing repair before the sign becomes an abnormality is set to 500 sheets (1804), the forced execution count is obtained using the following formula (1).

Forced execution count = print output count + print count until abnormality - predetermined number of sheets ...Formula (1)　　　　Formula (1)

The CPU 214 can acquire the forced execution count "5500" using the above formula, and stores this value in the HDD unit 216 as the forced execution count. Also, if repair is not carried out before the automatic repair timing that was set before the counter reaches 5500, the CPU 214 notifies the user by displaying, on the UI screen, a message indicating that repair will be forcibly executed. Note that the count value is merely an example, and can be determined depending on the repair content or can change depending on the state of the printing unit 107, and there is no limitation to this value.

Forced Execution of Automatic Repair

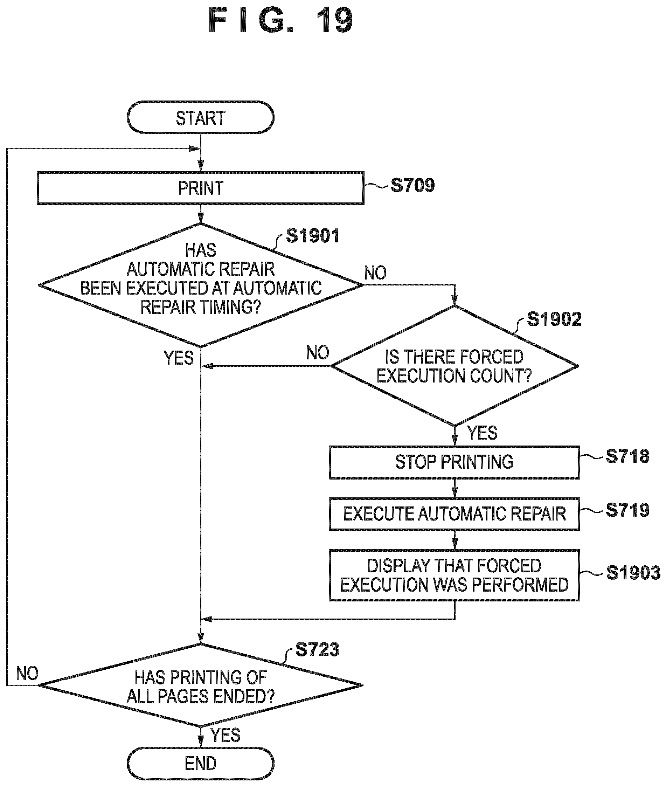

A processing procedure for forcibly executing repair during printing according to this embodiment will be described with reference to FIG. 19. The processing described hereinafter is executed by the CPU 206 of the printing unit 107, the CPU 214 of the diagnosis unit 108, and the CPU 251 of the external controller 102. Here, a mode will be described in which various CPUs execute the processing described below in an interlinked manner, but it is also possible to use a mode in which a single integrated CPU provided in the image forming apparatus executes all of the processing. The flowchart of FIG. 19 is started together with the printing.

First, in S709, the CPU 206 of the printing unit 107 performs printing based on the image data of the bitmap data received by the video I/F 205. Next, in S1901, the CPU 214 of the diagnosis unit 108 judges whether or not repair has been performed at the automatic repair timing based on the repair content previously stored in S721 of FIG. 7B. If automatic repair has already been performed at the automatic repair timing, the processing advances to S723, and if automatic repair has not already been performed, the processing advances to S1902.

In S1902, the CPU 214 checks whether the print count is 5500, which is the forced execution count calculated in S1702 of FIG. 17. If the print count is 5500, which is the forced execution count, the processing advances to S718, and if the print count is not 5500, the processing advances to S723.

In step S718, the CPU 214 judges that the timing for forcibly executing automatic repair has been reached, and stops printing. Next, in step S719, the CPU 214 notifies the printing unit 107 of the causal factor part and the repair content corresponding to the cause in FIG. 10, and executes the corresponding repair content in the printing unit 107. In S1903, the CPU 214 displays, on the UI display unit 241, the content of the repair performed in S719 and the fact that repair was forcibly executed before the sign became an abnormality, and the processing advances to S723. In S723, the CPU 251 of the external controller 102 checks that printing of all pages has ended, and if it has ended, the CPU 251 ends the processing of this flowchart, and if not, the CPU 251 returns to S709.

Note that in this embodiment, repair is forcibly executed before the sign becomes an abnormality, but if inspection has been performed, the abnormality will ultimately be removed by inspection, and therefore if inspection has not been performed, it is desirable to forcibly execute repair.

As described above, when a sign of an abnormality is detected, the diagnostic apparatus according to this embodiment predicts the number of image forming up to when the sign will change to an abnormality. Furthermore, the diagnostic apparatus determines the timing for forcibly executing repair of the image forming unit before the sign changes to an abnormality and before a set timing, based on the predicted number of image forming. As a result, according to this embodiment, in order to prevent a sign found in the sign diagnosis from becoming an abnormality before the timing for repair arrives, repair can be forcibly executed before the sign becomes an abnormality. This makes it possible to prevent the printed material from being discarded and wasted due to an abnormality that results in being judged as unacceptable in inspection.

Other Embodiments

Embodiments of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the present invention has been described with reference to exemplary embodiments, it is to be understood that the invention is not limited to the disclosed exemplary embodiments.

**Claims**

1. A diagnostic apparatus comprising:

   selecting means for selecting and setting, in response to a user operation, a timing for repairing image forming means in a case where a sign indicating that the image forming means is abnormal is detected;
   performing means for performing diagnosis of an abnormality and a sign thereof of the image forming means based on an image formed by the image forming means; and
   executing means for executing repair processing of the image forming means at the set timing when the sign of the abnormality is detected.

2. The diagnostic apparatus according to claim 1, further comprising:

   specifying means for specifying, when the abnormality or a sign thereof is detected, a part that is a causal factor thereof and content of automatic repair based on an image used for diagnosis;
   storing means for storing, if the sign of the abnormality is detected, the content of the automatic repair of the specified part that is the causal factor and the set timing in the one or more memory devices;
   executing means for executing, when the content of the automatic repair and the timing are stored in the one or more memory devices, repair processing corresponding to the content of the automatic repair at the timing.

3. The diagnostic apparatus according to claim 2, further comprising:
   deleting means for deleting, when the repair processing is executed, delete the content of the automatic repair and the timing stored in the one or more memory devices.

4. The diagnostic apparatus according to claim **1,** wherein
   the selecting means is able to select and set at least one of a timing after powering on the image forming means, a timing before performing image formation with the image forming means, a timing at which the sign of the abnormality is detected, a timing at which image formation that is being executed ends after the sign of the abnormality is detected, a timing after the image formation performed by the image forming means ends, a timing before the image forming means is powered off, and a timing designated individually, as a timing for performing repair when the sign of the abnormality is detected.

5. The diagnostic apparatus according to claim **1,** further comprising:
   setting means for setting, according to a user operation, a threshold level for when judging an abnormality or a sign thereof.

6. The diagnostic apparatus according to claim 5, wherein

the setting means is able to select and set at least two or more levels from a level at which detection is performed at an early time to a level at which detection is performed at a late time as the threshold level for when judging the sign of the abnormality.

7.  The diagnostic apparatus according to claim **1,** wherein
    the setting means sets, according to a user operation, whether or not to perform diagnosis of the sign of the abnormality when the image forming means executes image formation.

8.  The diagnostic apparatus according to claim 4, wherein
    The selecting means is able to individually set a timing for performing repair of the image forming means for each piece of content of automatic repair.

9.  The diagnostic apparatus according to claim 1, further comprising:
    judging means for judge, in a case where a predetermined number of occurrences of an abnormality are detected consecutively in diagnosis of each image obtained through image formation, the abnormality as an abnormality of the image forming means.

10. The diagnostic apparatus according to claim 1, further comprising:

    predicting means for predicting, when the sign of the abnormality is detected, a number of image forming up to when the sign will change to an abnormality; and
    determining means for determining, based on the predicted number of image forming, a timing for forcibly executing repair of the image forming means before the sign changes to an abnormality and before the set timing.

11. A control method for a diagnostic apparatus, comprising:

    selecting and setting a timing for repairing image forming means in a case where a sign indicating that the image forming means is abnormal is detected, in response to a user operation;
    performing diagnosis of an abnormality and a sign thereof of the image forming means based on an image formed by the image forming means; and
    executing repair processing of the image forming means at the set timing when the sign of the abnormality is detected.

12. A non-transitory computer-readable storage medium storing a computer program for causing a computer to execute each step of a control method for a diagnostic apparatus, the control method including:

    selecting and setting a timing for repairing image forming means in a case where a sign indicating that the image forming means is abnormal is detected, in response to a user operation;
    performing diagnosis of an abnormality and a sign thereof of the image forming means based on an image formed by the image forming means; and
    executing repair processing of the image forming means at the set timing when the sign of the abnormality is detected.

13. An image forming apparatus comprising:

    image forming means for forming an image on a recording medium;
    reading means for reading a recording medium on which an image has been formed by the image forming means; and
    the diagnostic apparatus according to claim 1.


**Patentansprüche**

1.  Diagnosevorrichtung mit:

    einer Auswahleinrichtung zum Auswählen und Einstellen einer Zeitvorgabe zum Reparieren einer Bilderzeugungseinrichtung im Ansprechen auf eine Benutzerbedienung in einem Fall, in dem ein Anzeichen erfasst wird, das angibt, dass die Bilderzeugungseinrichtung anormal ist,

einer Durchführungseinrichtung zum Durchführen einer Diagnose einer Unregelmäßigkeit und eines Anzeichens der Unregelmäßigkeit der Bilderzeugungseinrichtung beruhend auf einem durch die Bilderzeugungseinrichtung erzeugten Bild, und

einer Ausführungseinrichtung zum Ausführen einer Reparaturverarbeitung der Bilderzeugungseinrichtung zu der eingestellten Zeitvorgabe, wenn das Anzeichen der Unregelmäßigkeit erfasst wird.

2. Diagnosevorrichtung nach Anspruch 1, ferner mit:

einer Spezifizierungseinrichtung zum Spezifizieren eines Teils beim Erfassen der Unregelmäßigkeit oder ihres Anzeichens, der ihr kausaler Faktor ist, und von Inhalt einer automatischen Reparatur beruhend auf einem für eine Diagnose verwendeten Bild,
einer Speichereinrichtung zum Speichern des Inhalts der automatischen Reparatur des spezifizierten Teils, der der kausale Faktor ist, und der eingestellten Zeitvorgabe in der einen oder den mehreren Speichereinrichtungen, wenn das Anzeichen der Unregelmäßigkeit erfasst wird,
einer Ausführungseinrichtung zum Ausführen einer dem Inhalt der automatischen Reparatur entsprechenden Reparaturverarbeitung zu der Zeitvorgabe, wenn der Inhalt der automatischen Reparatur und die Zeitvorgabe in dem einen oder den mehreren Speichereinrichtungen gespeichert sind.

3. Diagnosevorrichtung nach Anspruch 2, ferner mit:
einer Löscheinrichtung zum Löschen des Inhalts der automatischen Reparatur und der Zeitvorgabe, die in dem einen oder den mehreren Speichereinrichtungen gespeichert sind, wenn die Reparaturverarbeitung ausgeführt ist.

4. Diagnosevorrichtung nach Anspruch 1, wobei
die Auswahleinrichtung zum Auswählen und Einstellen zumindest einer der folgenden Zeitvorgaben als Zeitvorgabe zum Durchführen einer Reparatur, wenn das Anzeichen der Unregelmäßigkeit erfasst wird, eingerichtet ist: einer Zeitvorgabe nach Einschalten der Bilderzeugungseinrichtung, einer Zeitvorgabe vor Durchführung einer Bilderzeugung mit der Bilderzeugungseinrichtung, einer Zeitvorgabe, zu der das Anzeichen der Unregelmäßigkeit erfasst wird, einer Zeitvorgabe, zu der eine Bilderzeugung, die ausgeführt wird, endet, nachdem das Anzeichen der Unregelmäßigkeit erfasst wird, einer Zeitvorgabe, nachdem die durch die Bilderzeugungseinrichtung durchgeführte Bilderzeugung endet, einer Zeitvorgabe vor Ausschalten der Bilderzeugungseinrichtung und einer individuell festgelegten Zeitvorgabe.

5. Diagnosevorrichtung nach Anspruch 1, ferner mit:
einer Einstelleinrichtung zum Einstellen eines Schwellenwerts für eine Beurteilung einer Unregelmäßigkeit oder ihres Anzeichens gemäß einer Benutzerbedienung.

6. Diagnosevorrichtung nach Anspruch 5, wobei
die Einstelleinrichtung zum Auswählen und Einstellen von zumindest zwei oder mehr Stufen aus einer Stufe, bei der eine Erfassung zu einem frühen Zeitpunkt durchgeführt wird, bis zu einer Stufe, bei der eine Erfassung zu einer späten Zeit durchgeführt wird, als Schwellenwertstufe für die Beurteilung des Anzeichens der Unregelmäßigkeit eingerichtet ist.

7. Diagnosevorrichtung nach Anspruch 1, wobei
die Einstelleinrichtung gemäß einer Benutzerbedienung einstellt, ob eine Diagnose des Anzeichens der Unregelmäßigkeit durchzuführen ist oder nicht, wenn die Bilderzeugungseinrichtung eine Bilderzeugung ausführt.

8. Diagnosevorrichtung nach Anspruch 4, wobei
die Auswahleinrichtung zum individuellen Einstellen einer Zeitvorgabe zum Durchführen einer Reparatur der Bilderzeugungseinrichtung für jedes Stück von Inhalt automatischer Reparatur eingerichtet ist.

9. Diagnosevorrichtung nach Anspruch 1, ferner mit:
einer Beurteilungseinrichtung einer Unregelmäßigkeit als Unregelmäßigkeit der Bilderzeugungseinrichtung in einem Fall, in dem bei einer Diagnose jedes über Bilderzeugung erhaltenen Bildes aufeinanderfolgend eine vorbestimmte Anzahl von Ereignissen der Unregelmäßigkeit erfasst wird.

10. Diagnosevorrichtung nach Anspruch 1, ferner mit:

einer Prädiktionseinrichtung zum Prognostizieren einer Anzahl von Bilderzeugungen bis zu dem Zeitpunkt, wann sich das Anzeichen in eine Unregelmäßigkeit ändern wird, wenn das Anzeichen der Unregelmäßigkeit erfasst wird, und

einer Bestimmungseinrichtung zum Bestimmen einer Zeitvorgabe zum zwingenden Ausführen einer Reparatur der Bilderzeugungseinrichtung beruhend auf der prognostizierten Anzahl von Bilderzeugungen, bevor sich das Anzeichen in eine Unregelmäßigkeit ändert und vor der eingestellten Zeitvorgabe.

11. Steuerverfahren für eine Diagnosevorrichtung, mit:

Auswählen und Einstellen einer Zeitvorgabe zum Reparieren einer Bilderzeugungseinrichtung in einem Fall, in dem ein Anzeichen erfasst wird, das angibt, dass die Bilderzeugungseinrichtung anormal ist, im Ansprechen auf eine Benutzerbedienung,

Durchführen einer Diagnose einer Unregelmäßigkeit und eines Anzeichens der Unregelmäßigkeit der Bilderzeugungseinrichtung beruhend auf einem durch die Bilderzeugungseinrichtung erzeugten Bild und

Ausführen einer Reparaturverarbeitung der Bilderzeugungseinrichtung zu der eingestellten Zeitvorgabe, wenn das Anzeichen der Unregelmäßigkeit erfasst wird.

12. Nichtflüchtiges computerlesbares Speichermedium, das ein Computerprogramm zum Veranlassen eines Computers speichert, jeden Schritt eines Steuerverfahrens für eine Diagnosevorrichtung auszuführen, wobei das Steuerverfahren enthält:

Auswählen und Einstellen einer Zeitvorgabe zum Reparieren einer Bilderzeugungseinrichtung in einem Fall, in dem ein Anzeichen erfasst wird, das angibt, dass die Bilderzeugungseinrichtung anormal ist, im Ansprechen auf eine Benutzerbedienung,

Durchführen einer Diagnose einer Unregelmäßigkeit und eines Anzeichens der Unregelmäßigkeit der Bilderzeugungseinrichtung beruhend auf einem durch die Bilderzeugungseinrichtung erzeugten Bild und

Ausführen einer Reparaturverarbeitung der Bilderzeugungseinrichtung zu der eingestellten Zeitvorgabe, wenn das Anzeichen der Unregelmäßigkeit erfasst wird.

13. Bilderzeugungsvorrichtung mit:

einer Bilderzeugungseinrichtung zur Erzeugung eines Bildes auf einem Aufzeichnungsmedium,

einer Leseeinrichtung zum Lesen eines Aufzeichnungsmediums, auf dem durch die Bilderzeugungseinrichtung ein Bild erzeugt wurde, und

der Diagnosevorrichtung nach Anspruch 1.

**Revendications**

1. Appareil de diagnostic comprenant :

un moyen de sélection pour sélectionner et établir, en réponse à une opération d'utilisateur, un minutage pour réparer un moyen de formation d'image dans le cas où un signe indiquant que le moyen de formation d'image est anormal est détecté ;

un moyen de réalisation pour réaliser un diagnostic d'une anomalie et d'un signe de celle-ci du moyen de formation d'image d'après une image formée par le moyen de formation d'image ; et

un moyen d'exécution pour exécuter un traitement de réparation du moyen de formation d'image au minutage établi quand le signe de l'anomalie est détecté.

2. Appareil de diagnostic selon la revendication 1, comprenant en outre :

un moyen de désignation pour désigner, quand l'anomalie ou un signe de celle-ci est détecté, une partie qui est un facteur causal de celle-ci et un contenu d'une réparation automatique basé sur une image utilisée pour le diagnostic ;

un moyen de stockage pour stocker, si le signe de l'anomalie est détecté, le contenu de la réparation automatique de la partie désignée qui est le facteur causal et le minutage établi dans un ou plusieurs dispositifs de mémoire ;

un moyen d'exécution pour exécuter, quand le contenu de la réparation automatique et le minutage sont stockés dans lesdits un ou plusieurs dispositifs de mémoire, un traitement de réparation correspondant au contenu de la réparation automatique au minutage.

3. Appareil de diagnostic selon la revendication 2, comprenant en outre un moyen de suppression pour supprimer, quand le traitement de réparation est exécuté, le contenu de la réparation automatique et le minutage stockés dans lesdits un ou plusieurs dispositifs de mémoire.

4. Appareil de diagnostic selon la revendication 1, dans lequel le moyen de sélection est apte à sélectionner et à établir au moins un paramètre parmi un minutage après la mise sous tension du moyen de formation d'image, un minutage avant la réalisation d'une formation d'image avec le moyen de formation d'image, un minutage auquel le signe de l'anomalie est détecté, un minutage auquel la formation d'image qui est en cours d'exécution se termine après la détection du signe de l'anomalie, un minutage après que la formation d'image réalisée par le moyen de formation d'image se termine, un minutage avant que le moyen de formation d'image soit mis hors tension, et un minutage désigné individuellement comme minutage pour réaliser une réparation quand le signe d'anomalie est détecté.

5. Appareil de diagnostic selon la revendication 1, comprenant en outre un moyen de réglage pour établir, selon une opération d'utilisateur, un niveau de seuil pour l'évaluation d'une anomalie ou d'un signe de celle-ci.

6. Appareil de diagnostic selon la revendication 5, dans lequel le moyen de réglage est apte à sélectionner et à établir au moins deux niveaux ou plus d'un niveau auquel la détection est réalisée tôt à un niveau auquel la détection est réalisée tard comme niveau de seuil pour l'évaluation du signe de l'anomalie.

7. Appareil de diagnostic selon la revendication 1, dans lequel le moyen de réglage établit, selon une opération d'utilisateur, s'il est nécessaire ou non d'effectuer un diagnostic du signe de l'anomalie quand le moyen de formation d'image exécute une formation d'image.

8. Appareil de diagnostic selon la revendication 4, dans lequel le moyen de sélection est apte à établir individuellement un minutage pour réaliser une réparation du moyen de formation d'image pour chaque contenu de réparation automatique.

9. Appareil de diagnostic selon la revendication 1, comprenant en outre un moyen d'évaluation pour évaluer, dans le cas où un nombre prédéterminé d'occurrences d'une anomalie sont détectées de manière consécutive dans le diagnostic de chaque image obtenue par formation d'image, l'anomalie en tant qu'anomalie du moyen de formation d'image.

10. Appareil de diagnostic selon la revendication 1, comprenant en outre :

un moyen de prédiction pour prédire, quand le signe de l'anomalie est détecté, un nombre de formation d'image jusqu'au moment du changement de signe vers une anomalie ; et
un moyen de détermination pour déterminer, d'après le nombre prédit de formation d'image, un minutage pour exécuter de force la réparation du moyen de formation d'image avant que le signe passe à une anomalie et avant le minutage établi.

11. Procédé de commande pour appareil de diagnostic, comprenant les étapes suivantes :

sélectionner et établir un minutage pour réparer un moyen de formation d'image dans le cas où un signe indiquant que le moyen de formation d'image est anormal est détecté, en réponse à une opération d'utilisateur ;
réaliser un diagnostic d'une anomalie et d'un signe de celle-ci du moyen de formation d'image d'après une image formée par le moyen de formation d'image ; et
exécuter un traitement de réparation du moyen de formation d'image au minutage établi quand le signe de l'anomalie est détecté.

12. Support de stockage non transitoire lisible par ordinateur stockant un programme informatique destiné à faire exécuter par un ordinateur chaque étape d'un procédé de commande pour appareil de diagnostic, le procédé de commande comprenant les étapes suivantes :

sélectionner et établir un minutage pour réparer un moyen de formation d'image dans le cas où un signe indiquant que le moyen de formation d'image est anormal est détecté, en réponse à une opération d'utilisateur ;
réaliser un diagnostic d'une anomalie et d'un signe de celle-ci du moyen de formation d'image d'après une image formée par le moyen de formation d'image ; et
exécuter un traitement de réparation du moyen de formation d'image au minutage établi quand le signe de l'anomalie est détecté.

**13.** Appareil de formation d'image comprenant :

un moyen de formation d'image pour former une image sur un support d'enregistrement ;
un moyen de lecture pour lire un support d'enregistrement sur lequel une image a été formée par le moyen de formation d'image ; et
l'appareil de diagnostic selon la revendication 1.

# FIG. 1

F I G. 2

# F I G. 3

EP 4 589 938 B1

# F I G. 4

EP 4 589 938 B1

| JOB MANAGEMENT SCREEN |
|---|

STORED JOB

| No. | USER | FILE NAME | NUMBER OF PAGES | NUMBER OF COPIES | TOTAL NUMBER OF PAGES | HOLD/PRINT |
|---|---|---|---|---|---|---|
| 1 | 0001 | CATALOG 01 | 20 | 200 | 4000 | PRINT |
|  |  |  |  |  |  |  |
|  |  |  |  |  |  |  |
|  |  |  |  |  |  |  |
|  |  |  |  |  |  |  |
|  |  |  |  |  |  |  |

401    402

COMPLETED JOB

| No. | USER | FILE NAME | NUMBER OF PAGES | NUMBER OF COPIES | TOTAL NUMBER OF PAGES | Status |
|---|---|---|---|---|---|---|
| THERE ARE NO JOB | | | | | | |
|  |  |  |  |  |  |  |
|  |  |  |  |  |  |  |
|  |  |  |  |  |  |  |
|  |  |  |  |  |  |  |
|  |  |  |  |  |  |  |

# F I G. 5

**DIAGNOSIS LEVEL SETTINGS**

INSPECTION LEVEL ~ **501**

STRICT     NORMAL     LENIENT

IMAGE DIAGNOSIS LEVEL ~ **502**

STRICT     NORMAL     LENIENT

SIGN DIAGNOSIS LEVEL ~ **503**

EARLY DETECTION     NORMAL     LATE DETECTION

CANCEL        OK

# F I G. 6

AUTOMATIC REPAIR SETTING

AUTOMATICALLY REPAIR ~601

AUTOMATICALLY REPAIR ACCORDING TO FOLLOWING
DETAILED TIMING SETTING

DETAILED TIMING SETTING ~602

DO NOT AUTOMATICALLY REPAIR ~603

PUSH REPAIR BUTTON INDIVIDUALLY TO REPAIR

OK          CANCEL

# F I G. 7A

```
                    ┌─────────────┐
                    │    START    │
                    └─────────────┘
                           │
                           ▼
        ┌──────────────────────────────────────┐
        │        SET SIGN DIAGNOSIS LEVEL       │─── S701
        └──────────────────────────────────────┘
                           │
                           ▼
        ┌──────────────────────────────────────┐
        │        AUTOMATIC REPAIR SETTING       │─── S702
        └──────────────────────────────────────┘
                           │
                           ▼
        ┌──────────────────────────────────────┐
        │        DETAILED TIMING SETTING        │─── S703
        └──────────────────────────────────────┘
                           │
                           ▼
        ┌──────────────────────────────────────┐
        │           RECEIVE PRINT JOB           │─── S704
        └──────────────────────────────────────┘
                           │             S705
                           ▼
                    ╱─────────────╲              NO
                  ╱                 ╲
                 ╱ PRE-PRINTING      ╲──────────────┐
                 ╲ RESPONSE?         ╱              │
                  ╲                 ╱               │
                    ╲─────────────╱                 │
                           │ YES                     │
                           ▼                         │
        ┌──────────────────────────────────────┐    │
        │        EXECUTE AUTOMATIC REPAIR       │─── S706
        └──────────────────────────────────────┘    │
                           │                         │
                           ▼                         │
        ┌──────────────────────────────────────┐    │
        │     DISPLAY EXECUTED REPAIR CONTENT   │─── S707
        └──────────────────────────────────────┘    │
                           │◄────────────────────────┘
        ②─────────────────┤
                           ▼
        ┌──────────────────────────────────────┐
        │  GENERATE BITMAP OF IMAGE TO BE PRINTED│─── S708
        └──────────────────────────────────────┘
                           │
                           ▼
        ┌──────────────────────────────────────┐
        │                 PRINT                 │─── S709
        └──────────────────────────────────────┘
                           │
                           ▼
                          ①
```

# F I G. 7B

EP 4 589 938 B1

# F I G. 8

# F I G. 9

900

DETAILED TIMING SETTING

AFTER POWER-ON
BEFORE JOB PRINTING STARTS ～902
IMMEDIATE RESPONSE ———903
AFTER A SIGN IS DETECTED AND AFTER PRINTING HAS STOPPED
AFTER ENDING JOB PRINTING ～901
AFTER POWER-OFF AND BEFORE ENDING
IN CASE OF INDIVIDUAL DESIGNATION AND TIMER DESIGNATION TIME

DESIGNATE TIME

OK                CANCEL

# F I G. 10

EP 4 589 938 B1

| CHARACTERISTICS OF DIFFERENCE (DEFECT) | | | CAUSAL FACTOR PART | CAUSE | REPAIR CONTENT | IS PAPER NECESSARY OR NOT DURING REPAIR |
|---|---|---|---|---|---|---|
| SHAPE | DIRECTIONALITY | PERIOD | | | | |
| STREAK | VERTICAL | CHARGING DEVICE | CHARGING DEVICE | CHARGING DEVICE DIRT | CHARGING DEVICE WIRE CLEANING | NO |
| STREAK | VERTICAL | DEVELOPING DEVICE | DEVELOPING DEVICE | DEVELOPING COAT DEFECT | DEVELOPING CYLINDER FORCED REFRESH | NO |
| STREAK | VERTICAL/ HORIZONTAL | PHOTOSENSITIVE DRUM | PHOTOSENSITIVE DRUM | PHOTOSENSITIVE DRUM CLEANING DEFECT | PHOTOSENSITIVE DRUM CLEANING BLADE CLEANING | NO |
| STREAK | VERTICAL/ HORIZONTAL | ITB | ITB | ITB CLEANING DEFECT | ITB CLEANING | NO |
| SPOT | - | PHOTOSENSITIVE DRUM | PHOTOSENSITIVE DRUM | DUST ADHERING TO PHOTOSENSITIVE DRUM | DRUM CLEANING | NO |
| SPOT | - | ITB | ITB | DUST ADHERING ITB | ITB CLEANING | NO |
| SPOT | - | SECONDARY TRANSFER | SECONDARY TRANSFER | DEFECTIVE SECONDARY TRANSFER VOLTAGE | SECONDARY TRANSFER VOLTAGE ADJUSTMENT | YES |

**F I G. 11**

```
                    ┌─────────────┐
                    │    START    │
                    └─────────────┘
                           │
          ┌────────────────────────────────────┐
          │     SET IMAGE DIAGNOSIS LEVEL      │──S1101
          └────────────────────────────────────┘
                           │
          ┌────────────────────────────────────┐
          │    RECEIVE DIAGNOSIS PRINT JOB     │──S1102
          └────────────────────────────────────┘
                           │
          ┌────────────────────────────────────┐
          │ GENERATE BITMAP OF IMAGE TO BE PRINTED │──S708
          └────────────────────────────────────┘
                           │
          ┌────────────────────────────────────┐
          │               PRINT                │──S709
          └────────────────────────────────────┘
                           │
          ┌────────────────────────────────────┐
          │       GENERATE REFERENCE IMAGE      │──S711
          │        FOR PRINT COMPARISON         │
          └────────────────────────────────────┘
                           │
          ┌────────────────────────────────────┐
          │         READ PRINTED IMAGE          │──S712
          └────────────────────────────────────┘
                           │
          ┌────────────────────────────────────┐
          │        CALCULATE DIFFERENCE         │──S713
          └────────────────────────────────────┘
                           │
                    S1103 ◇ IS THERE DIFFERENCE? ──YES──┐
                           │ NO                          │
                           │              SPECIFY CAUSAL FACTOR PART ──S1104
                           │                             │
                           │              S1105 ◇ SPECIFY CAUSAL FACTOR? ──NO──┐
                           │                             │ YES  S1106          │
                           │               STORE REPAIR CONTENT                │
                           │                             │                     │
                           ●←────────────────────────────┴─────────────────────┘
                           │
              NO ◇ HAS PRINTING OF ALL PAGES ENDED? ──S723
                           │ YES
              S1107 ◇ IS THERE REPAIR CONTENT? ──NO──┐
                           │ YES                      │
          ┌────────────────────────────────────┐     │
          │      EXECUTE AUTOMATIC REPAIR       │──S725
          └────────────────────────────────────┘     │
                           │                          │
          ┌────────────────────────────────────┐     │
          │  DISPLAY CONTENT OF EXECUTED REPAIR │──S1108
          └────────────────────────────────────┘     │
                           │←─────────────────────────┘
                    ┌─────────────┐
                    │     END     │
                    └─────────────┘
```

# F I G. 12A

```
                    ┌─────────────┐
                    │    START    │
                    └──────┬──────┘
                           ▼
        ┌──────────────────────────────────────┐
        │    SET INSPECTION DIAGNOSIS LEVEL     │────S1201
        └──────────────────┬───────────────────┘
                           ▼
        ┌──────────────────────────────────────┐
        │     INITIALIZE NG INSPECTION COUNT    │────S1202
        └──────────────────┬───────────────────┘
                           ▼
        ┌──────────────────────────────────────┐
        │             INITIALIZE N              │────S1203
        └──────────────────┬───────────────────┘
  ④ ──────────────────────●│
                           ▼
        ┌──────────────────────────────────────┐
        │   GENERATE BITMAP OF IMAGE TO BE PRINTED │────S708
        └──────────────────┬───────────────────┘
                           ▼
        ┌──────────────────────────────────────┐
        │                 PRINT                 │────S709
        └──────────────────┬───────────────────┘
                           ▼
        ┌──────────────────────────────────────┐
        │                N=N+1                  │────S1204
        └──────────────────┬───────────────────┘
                           ▼
        ┌──────────────────────────────────────┐
        │ GENERATE REFERENCE IMAGE FOR PRINT COMPARISON │────S711
        └──────────────────┬───────────────────┘
                           ▼
        ┌──────────────────────────────────────┐
        │          READ PRINTED IMAGE           │────S712
        └──────────────────┬───────────────────┘
                           ▼
        ┌──────────────────────────────────────┐
        │          CALCULATE DIFFERENCE         │────S713
        └──────────────────┬───────────────────┘
                           ▼
                          ③
```

# F I G. 12B

# F I G. 13

RECORDING MEDIUM
TRANSPORT DIRECTION

1301

1300

1302

# F I G. 14

1400

SIGN IMAGE DIAGNOSIS SETTINGS

EXECUTE IMAGE DIAGNOSIS TO FIND SIGNS OF FUTURE IMAGE DEFECT,
AND IF IDENTIFIED DEFECTS ARE REPAIRABLE, PERFORM AUTOMATIC REPAIR.

1401 YES     NO 1402

TIMING OF AUTOMATIC REPAIR CAN BE SET BELOW.

DETAILED TIMING SETTING 1403

OK     CANCEL

**F I G. 15**

| REPAIR CONTENT | IS PAPER NECESSARY OR NOT DURING REPAIR | REPAIR TIMING | |
|---|---|---|---|
| CHARGING DEVICE WIRE CLEANING | NO | CONFORM TO DETAILED TIMING SETTING | INDIVIDUAL REPAIR TIMING SETTING |
| DEVELOPING CYLINDER FORCED REFRESH | NO | CONFORM TO DETAILED TIMING SETTING | INDIVIDUAL REPAIR TIMING SETTING |
| PHOTOSENSITIVE DRUM CLEANING BLADE CLEANING | NO | CONFORM TO DETAILED TIMING SETTING | INDIVIDUAL REPAIR TIMING SETTING |
| PHOTOSENSITIVE DRUM CLEANING | NO | CONFORM TO DETAILED TIMING SETTING | INDIVIDUAL REPAIR TIMING SETTING |
| ITB CLEANING | NO | CONFORM TO DETAILED TIMING SETTING | INDIVIDUAL REPAIR TIMING SETTING |
| SECONDARY TRANSFER VOLTAGE ADJUSTMENT | YES | CONFORM TO DETAILED TIMING SETTING | INDIVIDUAL REPAIR TIMING SETTING |

1500 · 1501 · 1502

| REPAIR CONTENT | IS PAPER NECESSARY OR NOT DURING REPAIR | REPAIR TIMING | |
|---|---|---|---|
| CHARGING DEVICE WIRE CLEANING | NO | CONFORM TO REPAIR DETAILED TIMING | INDIVIDUAL REPAIR TIMING SETTING |
| DEVELOPING CYLINDER FORCED REFRESH | NO | CONFORM TO REPAIR DETAILED TIMING | INDIVIDUAL REPAIR TIMING SETTING |
| PHOTOSENSITIVE DRUM CLEANING BLADE CLEANING | NO | CONFORM TO REPAIR DETAILED TIMING | INDIVIDUAL REPAIR TIMING SETTING |
| PHOTOSENSITIVE DRUM CLEANING | NO | CONFORM TO REPAIR DETAILED TIMING | INDIVIDUAL REPAIR TIMING SETTING |
| ITB CLEANING | NO | CONFORM TO REPAIR DETAILED TIMING | INDIVIDUAL REPAIR TIMING SETTING |
| SECONDARY TRANSFER VOLTAGE ADJUSTMENT | YES | BEFORE JOB PRINTING STARTS | INDIVIDUAL REPAIR TIMING SETTING |

1510 · 1503

EP 4 589 938 B1

# F I G. 16

**1600**

INDIVIDUAL REPAIR TIMING SETTING

CONFORM TO DETAILED TIMING SETTING ~**1601**
AFTER POWER-ON
BEFORE JOB PRINTING STARTS
IMMEDIATE RESPONSE
AFTER SIGN IS DETECTED AND AFTER PRINTING HAS STOPPED
AFTER JOB PRINTING ENDS
AFTER POWER-OFF AND BEFORE ENDING
IN CASE OF INDIVIDUAL DESIGNATION AND TIMER DESIGNATION TIME

DESIGNATE TIME

OK     CANCEL

**1610**

INDIVIDUAL REPAIR TIMING SETTING

CONFORM TO DETAILED TIMING SETTING
AFTER POWER-ON
BEFORE JOB PRINTING STARTS ~**1602**
IMMEDIATE RESPONSE
AFTER SIGN IS DETECTED AND AFTER PRINTING HAS STOPPED
AFTER JOB PRINTING ENDS
AFTER POWER-OFF AND BEFORE ENDING
IN CASE OF INDIVIDUAL DESIGNATION AND TIMER DESIGNATION TIME

DESIGNATE TIME

OK     CANCEL

EP 4 589 938 B1

# FIG. 17

START

SPECIFY CAUSAL FACTOR PART — S715

CHECK AUTOMATIC REPAIR TIMING — S716

STORE REPAIR CONTENT AND TIMING — S721

STORE OUTPUT COUNT — S1701

CALCULATE AND STORE FORCED EXECUTION COUNT — S1702

DISPLAY FORCED EXECUTION SCHEDULE — S1703

END

# FIG. 18

# F I G. 19

```
                        ┌─────────────┐
                        │    START    │
                        └──────┬──────┘
                               │
        ┌──────────────────────┴──────────────────┐
        │                                          │
   ┌────┴─────────────────────────────────┐  S709
   │                PRINT                  │
   └────────────────┬──────────────────────┘
                    │
                S1901
             HAS AUTOMATIC REPAIR
             BEEN EXECUTED AT AUTOMATIC     ─── NO ───► S1902
             REPAIR TIMING?                              IS THERE FORCED
                                                         EXECUTION COUNT?
                 YES    ◄──── NO ────
```

START

PRINT — S709

HAS AUTOMATIC REPAIR BEEN EXECUTED AT AUTOMATIC REPAIR TIMING? — S1901

NO

IS THERE FORCED EXECUTION COUNT? — S1902

NO

YES

YES

STOP PRINTING — S718

EXECUTE AUTOMATIC REPAIR — S719

DISPLAY THAT FORCED EXECUTION WAS PERFORMED — S1903

HAS PRINTING OF ALL PAGES ENDED? — S723

NO

YES

END

39

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021164105 A

- US 11624995 B